(19) Europäisches Patentamt
European Patent Office
Office européen des brevets

(11) **EP 4 387 150 A1**

(12) **EUROPEAN PATENT APPLICATION**
published in accordance with Art. 153(4) EPC

(43) Date of publication:
**19.06.2024 Bulletin 2024/25**

(21) Application number: **22882727.5**

(22) Date of filing: **12.10.2022**

(51) International Patent Classification (IPC):
***H04L 5/00*** (2006.01)        ***H04W 72/04*** (2023.01)

(52) Cooperative Patent Classification (CPC):
**H04L 1/00; H04L 5/00; H04W 72/04;
H04W 72/0446; H04W 72/0453; H04W 72/23**

(86) International application number:
**PCT/CN2022/124935**

(87) International publication number:
**WO 2023/066117 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2021 CN 202111212805**

(71) Applicant: **Huawei Technologies Co., Ltd.
Shenzhen, Guangdong 518129 (CN)**

(72) Inventors:
• **HUANG, Huang
Shenzhen, Guangdong 518129 (CN)**
• **GAO, Kuandong
Shenzhen, Guangdong 518129 (CN)**
• **MA, Qianli
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DATA TRANSMISSION METHOD AND DEVICE**

(57)    Embodiments of the application disclose a data transmission method and an apparatus thereof. The method includes: A transmit end determines a reference signal and a data signal, and sends the reference signal and the data signal. The reference signal is for transmitting first data. The data signal is for transmitting second data. A resource element carrying the reference signal and a resource element carrying the data signal belong to a same frequency domain resource assignment. A modulation and coding parameter of the reference signal is smaller than a modulation and coding parameter of the data signal. The modulation and coding parameter includes one or more of the following: an MCS index, a modulation order, a code rate, or spectral efficiency. Data information is transmitted based on the reference signal, thereby helping improve data transmission efficiency.

FIG. 2

**Description**

This application claims priority to Chinese Patent Application No. 202111212805.9, filed with the China National Intellectual Property Administration on October 18, 2021 and entitled "DATA TRANSMISSION METHOD AND APPARATUS THEREOF", which is incorporated herein by reference in its entirety.

**TECHNICAL FIELD**

The application relates to the field of communication technologies, and in particular, to a data transmission method and an apparatus thereof.

**BACKGROUND**

High frequency bands with rich frequency band resources are used in the industry to satisfy increasing communication requirements. These high frequency bands have high bandwidths and highly integrated antenna arrays, and are used for transmission to implement high throughputs. However, there is also a major phase noise (phase noise, PHN) problem. In this case, performance of a high-frequency communication system is deteriorated or even the high-frequency communication system cannot work. A phase tracking reference signal (phase tracking reference signal, PTRS) is introduced to track phase noise and compensate for an error caused by the phase noise, so that impact of the phase noise can be reduced, and demodulation performance of the high-frequency communication system can be improved.

Currently, a network device may configure frequency domain density and time domain density for a PTRS in an orthogonal frequency division multiplexing (orthogonal frequency division multiplexing, OFDM) technology. The time domain density may be a value in 4, 2, or 1, where 1, 2, and 4 respectively indicate that there is one PTRS on every one time domain symbol, every two time domain symbols, and every four time domain symbols. There may be no PTRS in frequency domain, or the frequency domain density is 4 or 2, where 4 and 2 respectively indicate that there is one PTRS in every four resource blocks (resource blocks, RBs) and every two RBs in a scheduled bandwidth. When the network device does not configure the time domain density and the frequency domain density for the PTRS, there is a PTRS on each scheduled time domain symbol, and there is one PTRS in every two RBs in the scheduled bandwidth.

It can be learned that, in the high-frequency communication system, a large quantity of PTRSs are transmitted. In this way, data transmission efficiency is low.

**SUMMARY**

Embodiments of the application provide a data transmission method and an apparatus thereof, to transmit data based on a reference signal, thereby helping improve data transmission efficiency.

According to a first aspect, an embodiment of the application provides a data transmission method. The method may be performed by a transmit end, or may be performed by a chip used in the transmit end. The method includes: The transmit end determines a reference signal and a data signal, and sends the reference signal and the data signal. The reference signal is for transmitting first data. The data signal is for transmitting second data. A resource element carrying the reference signal and a resource element carrying the data signal belong to a same frequency domain resource assignment. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

In the technical solution, the first data is transmitted based on the reference signal, thereby helping improve data transmission efficiency. The modulation and coding parameter of the reference signal is smaller than the modulation and coding parameter of the data signal, so that a lower signal-to-noise ratio is needed for demodulating the reference signal, a success rate of demodulating the reference signal at a receive end is higher, and data can be successfully transmitted based on the reference signal, thereby helping improve the data transmission efficiency.

In an implementation, the modulation and coding parameter of the reference signal is determined based on the modulation and coding parameter of the data signal, or the modulation and coding parameter of the data signal is determined based on the modulation and coding parameter of the reference signal.

In an implementation, the modulation and coding parameter of the reference signal is determined based on one or more of the following parameters: the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals included in a reference signal block to which the reference signal belongs, or a data volume of the first data.

In an implementation, the method further includes: The transmit end sends indication information, where the indication information indicates the modulation and coding parameter of the reference signal.

In an implementation, a resource block carrying the reference signal further carries first information. The reference signal is transmitted based on a first transport block, and the first information is transmitted based on a second transport block.

In the technical solution, the reference signal may exist as an independent transport block, and other information (that is, the first information) carried in the resource block carrying the reference signal and the reference signal are transmitted based on different transport blocks, thereby helping avoid interference of the first information to the reference signal.

In an implementation, the first transport block and the second transport block are a same transport block.

In the technical solution, the other information (that is, the first information) carried in the resource block carrying the reference signal and the reference signal are transmitted based on a same transport block, thereby helping reduce used transport block resources.

In an implementation, the reference signal includes a first reference signal and a second reference signal. A resource element carrying the first reference signal is adjacent to a resource element carrying the second reference signal in at least one of the following domains: time domain or frequency domain. The first reference signal is a reference signal having a largest modulation and coding parameter in the reference signal for transmitting the first data. The second reference signal is a reference signal having a smallest modulation and coding parameter in the reference signal for transmitting the first data.

In the technical solution, for a signal, a smaller modulation and coding parameter of the signal indicates a lower signal-to-noise ratio needed for demodulating the signal at the receive end. The second reference signal is the reference signal having the smallest modulation and coding parameter in the reference signal for transmitting the first data. Therefore, a lower signal-to-noise ratio is needed for demodulating the second reference signal, and a success rate of demodulating the second reference signal at the receive end is higher, so that an estimation result on phase noise of the second reference signal can be successfully obtained. The resource element carrying the first reference signal is adjacent to the resource element carrying the second reference signal in at least one of the following domains: time domain or frequency domain. Therefore, the estimation result on the phase noise of the second reference signal may be used to determine an estimation result on phase noise of the first reference signal. This manner helps improve accuracy of the estimation result of the phase noise of the second reference signal, and helps improve phase noise estimation performance.

In an implementation, the first data is specifically transmitted based on a plurality of reference signal blocks. Each reference signal block includes a plurality of reference signals, and each reference signal block includes at least two reference signals that have different modulation and coding parameters.

The technical solution helps improve efficiency of transmitting data based on the reference signal.

In an implementation, the reference signal is a phase tracking reference signal.

In an implementation, the first data is specifically transmitted based on a first reference signal block and a second reference signal block. For each reference signal in the first reference signal block, a modulation and coding parameter of the reference signal is the same as a modulation and coding parameter of a corresponding reference signal in the second reference signal block.

In the technical solution, only a modulation and coding parameter of a reference signal in one reference signal block (for example, the first reference signal block) needs to be indicated, and there is no need to indicate a modulation and coding parameter of a reference signal in another reference signal block (for example, the second reference signal block), thereby helping reduce the used resources.

In an implementation, the first data is specifically transmitted based on a third reference signal block and a fourth reference signal block. A modulation and coding parameter of each reference signal in the third reference signal block is a first modulation and coding parameter. A modulation and coding parameter of each reference signal in the fourth reference signal block is a second modulation and coding parameter.

In the technical solution, the third reference signal block and the fourth reference signal block each include only reference signals having a same modulation and coding parameter, and reference signals in different reference signal blocks (that is, the third reference signal block and the fourth reference signal block) have different modulation and coding parameters. In this manner, only one modulation and coding parameter needs to be indicated for one reference signal block, and there is no need to indicate a modulation and coding parameter for each reference signal in the reference signal block, thereby helping reduce the used resources, and helping improve the efficiency of transmitting data based on the reference signal.

In an implementation, orthogonal cover code OCC information of the reference signal is the same as OCC information of a demodulated reference signal.

In the technical solution, the OCC information of the reference signal may not need to be separately indicated, thereby helping reduce the used resources.

According to a second aspect, an embodiment of the application provides another data transmission method. The method may be performed by a receive end, or may be performed by a chip used in the receive end. The method includes: The receive end obtains a first signal and a second signal, demodulates the first signal to obtain first data, and demodulates the second signal to obtain second data. The first signal includes a signal obtained after a reference signal is transmitted. The second signal includes a signal obtained after a data signal is transmitted. A resource element carrying the reference signal and a resource element carrying the data signal belong to a same frequency domain resource assignment. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

In the technical solution, the first data is transmitted based on the reference signal, thereby helping improve data transmission efficiency. The modulation and coding parameter of the reference signal is smaller than the modulation and coding parameter of the data signal, so that a lower signal-to-noise ratio is needed for demodulating the reference signal, a success rate of demodulating the reference signal at the receive end is higher, and data can be successfully transmitted based on the reference signal, thereby helping improve the data transmission efficiency.

In an implementation, the modulation and coding parameter of the reference signal is determined based on the modulation and coding parameter of the data signal, or the modulation and coding parameter of the data signal is determined based on the modulation and coding parameter of the reference signal.

In an implementation, the modulation and coding parameter of the reference signal is determined based on one or more of the following parameters: the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals included in a reference signal block to which the reference signal belongs, or a data volume of the first data.

In an implementation, the method further includes: The receive end obtains indication information, where the indication information indicates the modulation and coding parameter of the reference signal.

In an implementation, a resource block carrying the reference signal further carries first information. The reference signal is transmitted based on a first transport block, and the first information is transmitted based on a second transport block.

In the technical solution, the reference signal may exist as an independent transport block, and other information (that is, the first information) carried in the resource block carrying the reference signal and the reference signal are transmitted based on different transport blocks, thereby helping avoid interference of the first information to the reference signal.

In an implementation, the first transport block and the second transport block are a same transport block.

In the technical solution, the other information (that is, the first information) carried in the resource block carrying the reference signal and the reference signal are transmitted based on a same transport block, thereby helping reduce used transport block resources.

In an implementation, the reference signal includes a first reference signal and a second reference signal. A resource element carrying the first reference signal is adjacent to a resource element carrying the second reference signal in at least one of the following domains: time domain or frequency domain. The first reference signal is a reference signal having a largest modulation and coding parameter in the reference signal for transmitting the first data. The second reference signal is a reference signal having a smallest modulation and coding parameter in the reference signal for transmitting the first data.

In the technical solution, for a signal, a smaller modulation and coding parameter of the signal indicates a lower signal-to-noise ratio needed for demodulating the signal at the receive end. The second reference signal is the reference signal having the smallest modulation and coding parameter in the reference signal for transmitting the first data. Therefore, a lower signal-to-noise ratio is needed for demodulating the second reference signal, and a success rate of demodulating the second reference signal at the receive end is higher, so that an estimation result on phase noise of the second reference signal can be successfully obtained. The resource element carrying the first reference signal is adjacent to the resource element carrying the second reference signal in at least one of the following domains: time domain or frequency domain. Therefore, the estimation result on the phase noise of the second reference signal may be used to determine an estimation result on phase noise of the first reference signal. This manner helps improve the accuracy of the estimation result of the phase noise of the second reference signal, and helps improve the phase noise estimation performance.

In an implementation, the first signal specifically includes a signal obtained after a reference signal in a plurality of reference signal blocks is transmitted. Each reference signal block includes a plurality of reference signals, and each reference signal block includes at least two reference signals that have different modulation and coding parameters.

The technical solution helps improve efficiency of transmitting data based on the reference signal.

In an implementation, the reference signal is a phase tracking reference signal.

In an implementation, the first signal specifically includes a signal obtained after a reference signal in a first reference signal block is transmitted and a signal obtained after a reference signal in a second reference signal block is transmitted. For each reference signal in the first reference signal block, a modulation and coding parameter of the reference signal is the same as a modulation and coding parameter of a corresponding reference signal in the second reference signal block.

In the technical solution, only a modulation and coding parameter of a reference signal in one reference signal block (for example, the first reference signal block) needs to be indicated, and there is no need to indicate a modulation and coding parameter of a reference signal in another reference signal block (for example, the second reference signal block), thereby helping reduce used resources.

In an implementation, the first signal specifically includes a signal obtained after a reference signal in a third reference signal block is transmitted and a signal obtained after a reference signal in a fourth reference signal block is transmitted. A modulation and coding parameter of each reference signal in the third reference signal block is a first modulation and coding parameter. A modulation and coding parameter of each reference signal in the fourth reference signal block is a second modulation and coding parameter.

In the technical solution, the third reference signal block and the fourth reference signal block each include only reference signals having a same modulation and coding parameter, and reference signals in different reference signal blocks (that is, the third reference signal block and the fourth reference signal block) have different modulation and coding parameters. In this manner, only one modulation and coding parameter needs to be indicated for one reference signal block, and there is no need to indicate a modulation and coding parameter for each reference signal in the reference signal block, thereby helping reduce used resources, and helping improve efficiency of transmitting data based on the reference signal.

In an implementation, orthogonal cover code OCC information of the reference signal is the same as OCC information of a demodulated reference signal.

In the technical solution, the OCC information of the reference signal may not need to be separately indicated, thereby helping reduce used resources.

According to a third aspect, an embodiment of the application provides a communication apparatus. The communication apparatus has some or all of functions of implementing the transmit end in the method examples in the first aspect. For example, the functions of the communication apparatus may have functions in some or all of embodiments of the application, or may have a function of independently implementing any embodiment of the application. The function may be implemented by hardware, or may be implemented by hardware executing corresponding software. The hardware or the software includes one or more units or modules corresponding to the functions.

In an implementation, a structure of the communication apparatus may include a processing unit and a transceiver unit. The processing unit is configured to support the communication apparatus in performing a function of the transmit end in the foregoing method. The transceiver unit is configured to support communication between the communication apparatus and another device. The communication apparatus may further include a storage unit. The storage unit is configured to be coupled to the processing unit and the transceiver unit, and stores a computer program and data that are necessary for the communication apparatus.

In an implementation, the communication apparatus includes: a processing unit, configured to determine a reference signal and a data signal, where the reference signal is for transmitting first data, the data signal is for transmitting second data, and a resource element carrying the reference signal and a resource element carrying the data signal belong to a same frequency domain resource assignment; and a transceiver unit, configured to send the reference signal and the data signal. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

According to a fourth aspect, an embodiment of the application provides another communication apparatus. The communication apparatus has some or all of functions of implementing the receive end in the method examples in the second aspect. For example, the functions of the communication apparatus may have functions in some or all of embodiments of the application, or may have a function of independently implementing any embodiment of the application. The function may be implemented by hardware, or may be implemented by hardware executing corresponding software. The hardware or the software includes one or more units or modules corresponding to the functions.

In an implementation, a structure of the communication apparatus may include a processing unit and a transceiver unit. The processing unit is configured to support the communication apparatus in performing a function of the receive end in the foregoing method. The transceiver unit is configured to support communication between the communication apparatus and another device. The communication apparatus may further include a storage unit. The storage unit is configured to be coupled to the processing unit and the transceiver unit, and stores a computer program and data that are necessary for the communication apparatus.

In an implementation, the communication apparatus includes: a transceiver unit, configured to obtain a first signal and a second signal, where the first signal includes a signal obtained after a reference signal is transmitted, the second signal includes a signal obtained after a data signal is transmitted, and a resource element carrying the reference signal and a resource element carrying the data signal belong to a same frequency domain resource assignment; and a processing unit, configured to demodulate the first signal to obtain first data. The processing unit is further configured to demodulate the second signal to obtain second data. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

According to a fifth aspect, the application provides still another communication apparatus, including a processor. The processor is coupled to a memory. The memory is configured to store program code. The processor is configured to invoke the program code from the memory to perform the method according to the first aspect, or perform the method according to the second aspect.

According to a sixth aspect, an embodiment of the present invention provides a computer-readable storage medium. The computer-readable storage medium stores a computer program. The computer program includes program instructions. When the program instructions are executed by a communication apparatus, the communication apparatus is enabled to perform the method according to the first aspect.

According to a seventh aspect, an embodiment of the present invention provides a computer-readable storage medium. The computer-readable storage medium stores a computer program. The computer program includes program instructions. When the program instructions are executed by a communication apparatus, the communication apparatus is enabled to perform the method according to the second aspect.

According to an eighth aspect, the application further provides a computer program product including a computer program or instructions. When the computer program or the instructions is/are run on a computer, the computer is enabled to perform the method according to the first aspect.

According to a ninth aspect, the application further provides a computer program product including a computer program or instructions. When the computer program or the instructions is/are run on a computer, the computer is enabled to perform the method according to the second aspect.

According to a tenth aspect, the application provides a chip system. The chip system includes a logic circuit and an input/output interface, and is configured to implement functions, for example, at least one of determining or processing data and information related in the method, in the first aspect. In a possible design, the chip system further includes a memory, and the memory is configured to store a computer program and data that are necessary to a transmit end. The chip system may include a chip, or may include a chip and another discrete component.

According to an eleventh aspect, the application provides a chip system. The chip system includes a logic circuit and an input/output interface, and is configured to implement functions, for example, at least one of determining or processing data and information related in the method, in the second aspect. In a possible design, the chip system further includes a memory, and the memory is configured to store a computer program and data that are necessary to a receive end. The chip system may include a chip, or may include a chip and another discrete component.

For beneficial effect of the third aspect to the eleventh aspect, refer to the first aspect or the second aspect. Details are not described herein again.

## BRIEF DESCRIPTION OF DRAWINGS

FIG. 1a is a schematic diagram of an architecture of a communication system according to an embodiment of the application;

FIG. 1b is a schematic diagram of a processing procedure of a transmit end when a reference signal and a data signal are transmitted based on a multi-carrier waveform according to an embodiment of the application;

FIG. 1c is a schematic diagram of a processing procedure of a receive end when a reference signal and a data signal are transmitted based on a multi-carrier waveform according to an embodiment of the application;

FIG. 1d is a schematic diagram of a processing procedure of a transmit end when a reference signal and a data signal are transmitted based on a single-carrier waveform according to an embodiment of the application;

FIG. 1e is a schematic diagram of a processing procedure of a receive end when a reference signal and a data signal are transmitted based on a single-carrier waveform according to an embodiment of the application;

FIG. 1f is a schematic diagram of an architecture of another communication system according to an embodiment of the application;

FIG. 2 is a schematic flowchart of a data transmission method according to an embodiment of the application;

FIG. 3 is a schematic flowchart of another data transmission method according to an embodiment of the application;

FIG. 4a is a schematic diagram of an arrangement manner of modulation and coding parameters of reference signal blocks according to an embodiment of the application;

FIG. 4b is a schematic diagram of another arrangement manner of modulation and coding parameters of reference signal blocks according to an embodiment of the application;

FIG. 4c is a schematic diagram of still another arrangement manner of modulation and coding parameters of reference signal blocks according to an embodiment of the application;

FIG. 5a is a schematic diagram of still another arrangement manner of modulation and coding parameters of reference signal blocks according to an embodiment of the application;

FIG. 5b is a schematic diagram of still another arrangement manner of modulation and coding parameters of reference signal blocks according to an embodiment of the application;

FIG. 6a is a schematic diagram of still another arrangement manner of modulation and coding parameters of reference signal blocks according to an embodiment of the application;

FIG. 6b is a schematic diagram of still another arrangement manner of modulation and coding parameters of reference signal blocks according to an embodiment of the application;

FIG. 7a is a schematic diagram of still another arrangement manner of modulation and coding parameters of reference signal blocks according to an embodiment of the application;

FIG. 7b is a schematic diagram of still another arrangement manner of modulation and coding parameters of reference signal blocks according to an embodiment of the application;

FIG. 8 is a schematic diagram of a structure of a communication apparatus according to an embodiment of the application;

FIG. 9 is a schematic diagram of a structure of another communication apparatus according to an embodiment of the application; and

FIG. 10 is a schematic diagram of a structure of a chip according to an embodiment of the application.

## DESCRIPTION OF EMBODIMENTS

To better understand technical solutions provided in embodiments of the application, technical terms in embodiments of the application are first described.

### (1) Resource element, resource block (resource block, RB), and transport block (transport block, TB)

The resource element may be a physical resource of a specific granularity. For example, the resource element may be a smallest resource unit in the physical resource, and the resource element may also be referred to as a resource element (resource element, RE) or a resource particle. Alternatively, the resource element may be a physical resource including a plurality of resource units. In addition, the resource element may alternatively be another defined physical resource. For example, the resource element indicates a period of time in time domain, and indicates a segment of bandwidth in frequency domain. This is not limited in the application. For another example, the resource element indicates one OFDM symbol in time domain, and indicates one resource block (resource block, RB) in frequency domain. One RE indicates one orthogonal frequency division multiplexing (orthogonal frequency division multiplexing, OFDM) symbol in time domain, and indicates one subcarrier in frequency domain.

The resource block RB includes a plurality of subcarriers or a plurality of REs. For example, one RB includes 12 subcarriers. RBs may be classified into different types, and each type of RB may include different quantities of subcarriers and different subcarrier number ranges.

The transport block TB indicates a data information block to be encoded. The TB may include a plurality of RBs, and the RB may be a minimum unit of a scheduled resource. The transport block is a basic unit for data exchange between a media access control (media access control, MAC) sublayer and a physical layer. A cyclic check bit may be added after the transport block for check.

### (2) Modulation and coding parameter

The modulation and coding parameter may include one or more of the following: a modulation and coding scheme (modulation and coding scheme, MCS) index, a modulation order (Modulation Order), a code rate (coding rate, or code rate for short), or spectral efficiency (spectral efficiency, SE). The code rate indicates a ratio of original data bits to encoded data bits. The spectral efficiency indicates a quantity of original data bits that can be transmitted on one subcarrier.

An MCS is a scheme for coding and modulating the original data bits. The MCS may include three parameters: the modulation order, the code rate, and the spectral efficiency, and a combination of the three parameters may be indicated by an MCS index (index), as shown in Table 1. The MCS index uniquely identifies an MCS.

**Table 1 MCS table**

| MCS index (MCS index) | Modulation order (Modulation Order) ($Q_m$) | Target code rate (Target code Rate) ($R_x$) | Spectral efficiency (Spectral efficiency) |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

In Table 1, $Q_m$ in the second column is the modulation order. For example, 2, 4, and 6 respectively indicate QPSK, 16QAM, and 64QAM. The target code rate (Target code Rate) $R_x$ in the third column indicates a product of a code rate (for example, indicated by R) and 1024, where R<1. For example, 120 in the first row and the third column in Table 1 indicates R* 1024, that is, the code rate R=120/1024=0.1172.
It should be noted that the modulation and coding scheme may also be referred to as a modulation and coding scheme. The MCS index may also be referred to as an MCS number, and two concepts of the MCS index and the MCS number may be interchanged.

**(3) Phase noise (phase noise, PN)**

A phase noise (or referred to as PN for short) refers to a random change of a phase of an output signal of a communication device caused by various noises of a communication device (for example, various radio frequency components) that sends a signal. For example, impact of the phase noise may be shown in formula 1-1:

$$y(n) = x(n)e^{j\theta_n} \qquad\qquad \text{formula 1-1}$$

n=0, 1, ..., or N-1, and is a time-domain sampling point. Simply speaking, the phase noise is a random phase value generated at each sampling point n. A basic principle of estimating the phase noise of the reference signal is as follows: A known reference signal (that is, known $x(n)$) is inserted at a transmit end, a received reference signal (that is, known $y(n)$) is read at a receive end, and a phase noise value (that is, a value $\theta$) can be calculated based on $x(n)$ and $y(n)$.

**(4) Downlink control information (downlink control information, DCI)**

The DCI may include but is not limited to one or more of the following field content:
A carrier indicator (carrier indicator) field indicates a carrier on which a scheduled physical downlink shared channel (physical downlink shared channel, PDSCH) is located.
A bandwidth part indicator (bandwidth part indicator) field determines a bandwidth range of a scheduled PDSCH.
A frequency domain resource assignment (frequency domain resource assignment) indicates a quantity and a start point of consecutive resource blocks of a frequency domain resource occupied by a PDSCH in a specific bandwidth range. This field indicates a scheduled bandwidth of the PDSCH and a start point of the bandwidth. In embodiments of the application, a resource element carrying a reference signal and a resource element carrying a data signal belong to a same frequency domain resource assignment.
A time domain resource assignment (time domain resource assignment) indicates a quantity of consecutive symbols and a start symbol of a time domain resource occupied by a PDSCH.
Modulation and coding scheme (modulation and coding scheme, MCS).
New data indicator (New data indicator).
Redundancy version (Redundancy version).
To better understand a data transmission method disclosed in embodiments of the application, the following first describes a communication system applicable to embodiments of the application.

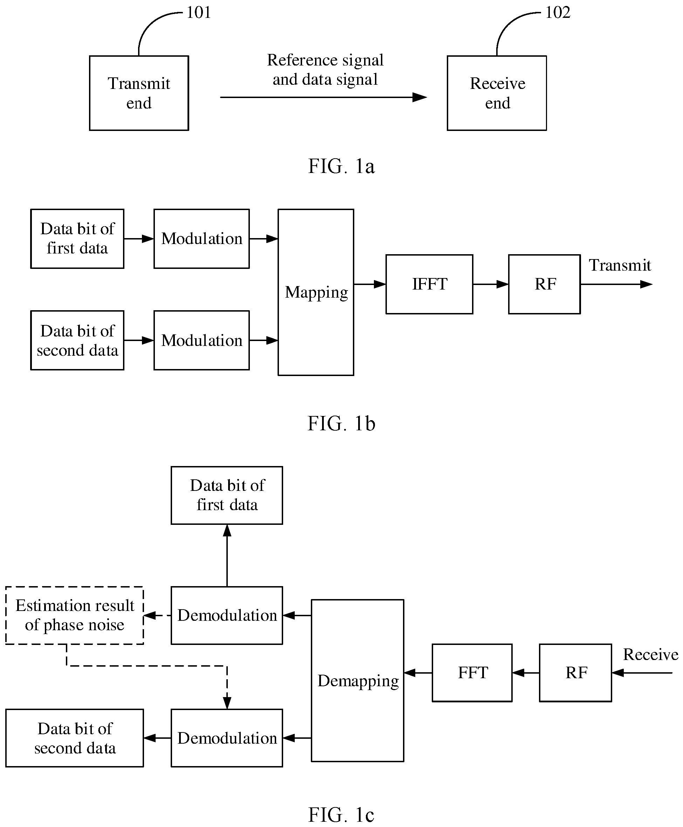

FIG. 1a is a schematic diagram of an architecture of a communication system according to an embodiment of the application. As shown in FIG. 1a, the communication system includes a transmit end 101 and a receive end 102.
The transmit end 101 may determine a reference signal and a data signal, and sends the reference signal and the data signal. The reference signal is for transmitting first data. The data signal is for transmitting second data. A resource element carrying the reference signal and a resource element carrying the data signal belong to a same frequency domain resource assignment. A modulation and coding parameter of the reference signal is smaller than a modulation and coding parameter of the data signal. The modulation and coding parameter includes one or more of the following: an MCS index, a modulation order, a code rate, or spectral efficiency. Correspondingly, the receive end 102 may be configured to: obtain a first signal and a second signal, demodulate the first signal to obtain the first data, and demodulate the second signal to obtain the second data. The first signal includes a signal obtained after the reference signal is transmitted, and the second signal includes a signal obtained after the data signal is transmitted. In the application, the signal (for example, the reference signal or the data signal) may be transmitted through a wired channel or a wireless channel. After transmission, the receive end receives a transmitted signal (that is, the first signal or the second signal). A signal transmission manner is not limited in the application.
Data information (that is, the first data) is transmitted based on the reference signal, thereby helping improve data transmission efficiency. It should be noted that, for a signal, a smaller modulation and coding parameter of the signal indicates a lower signal-to-noise ratio needed for demodulating the signal at the receive end. A signal-to-noise ratio required for demodulating a signal may be understood as follows: When a signal-to-noise ratio of the signal is greater than a signal-to-noise ratio threshold, the receive end may successfully demodulate the signal. Alternatively, when a signal-to-noise ratio of the signal is smaller than or equal to the signal-to-noise ratio threshold, the receive end cannot successfully demodulate the signal. In this case, the signal-to-noise ratio threshold may be understood as a minimum signal-to-noise ratio required for demodulating the signal. In the application, a modulation and coding parameter of the reference signal is smaller than a modulation and coding parameter of the data signal, so that a lower signal-to-noise ratio is needed for demodulating the reference signal, a success rate of demodulating the reference signal at the receive end is higher, and data can be successfully transmitted based on the reference signal, thereby helping improve the data transmission efficiency.

In an implementation, the reference signal and the data signal may be transmitted based on a multi-carrier waveform, or the reference signal and the data signal may be transmitted based on a single-carrier waveform.

When the reference signal and the data signal are transmitted based on the multi-carrier waveform, for a processing procedure of the transmit end, refer to FIG. 1b. For a processing procedure of the receive end, refer to FIG. 1c. As shown in FIG. 1b, after obtaining the first data and the second data, the transmit end sequentially performs modulation (modulation), mapping (mapping), and inverse fast Fourier transform (inverse fast Fourier transform, IFFT), and then sends a signal (for example, the reference signal and the data signal) based on radio frequency (radio frequency, RF). Modulation indicates that a data bit of the data (for example, the first data and the second data) is modulated to a modulation symbol. Mapping indicates that a signal is mapped to a sent subcarrier (for example, multiple carriers or a single carrier). IFFT indicates that inverse Fourier transform is performed on a frequency-domain signal, to transform the frequency-domain signal into a time-domain signal. Optionally, after the IFFT, a cyclic prefix (cyclic prefix, CP) may be further added.

As shown in FIG. 1c, after receiving a signal (the first signal and the second signal) via a radio frequency unit, the receive end sequentially performs fast Fourier transform (fast Fourier transform, FFT), demapping, and demodulation, obtains the first data based on the first signal, and obtains the second data based on the second signal. FFT indicates that Fourier transform is performed on a received signal to transform the signal from time domain to frequency domain. Optionally, before the Fourier transform is performed, a cyclic prefix of the received signal may be first removed. Demapping indicates that a signal is removed from a subcarrier, and a channel processing operation is performed on the signal.

Optionally, the first signal is demodulated, to obtain an estimation result of phase noise. Optionally, when the second signal is demodulated, an estimation result of phase noise may be used. In other words, the estimation result of phase noise may be used to assist demodulation on the second signal.

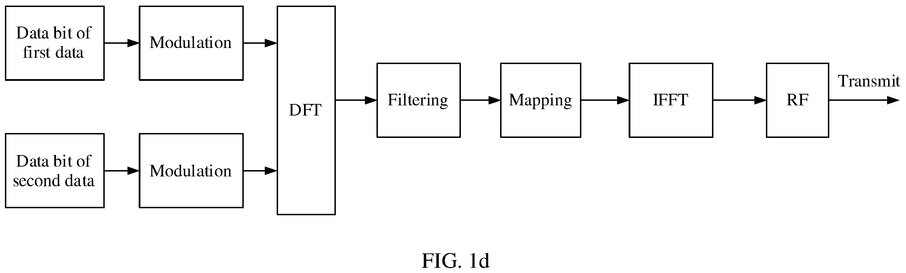

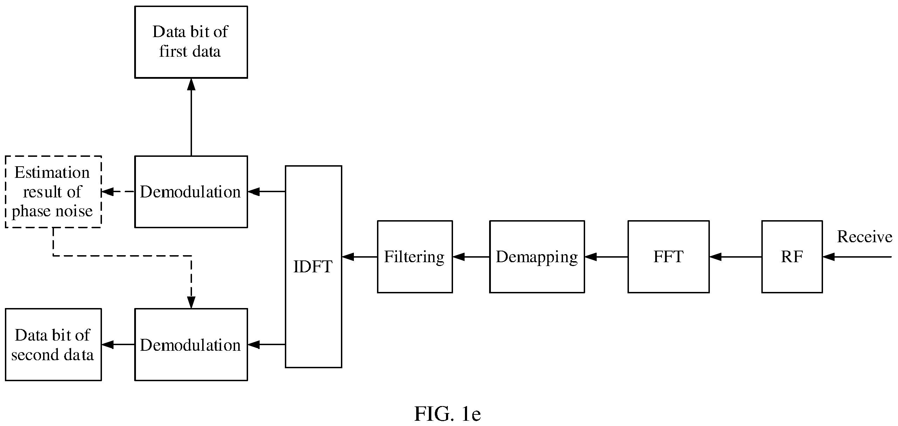

When the reference signal and the data signal are transmitted based on the single-carrier waveform, for a processing procedure of the transmit end, refer to FIG. 1d. For a processing procedure of the receive end, refer to FIG. 1e. As shown in FIG. 1d, after obtaining the first data and the second data, the transmit end sequentially performs modulation (modulation), discrete Fourier transform (discrete Fourier transform, DFT), filtering (Filtering) (optional), mapping (mapping), and inverse fast Fourier transform (inverse fast Fourier transform, IFFT), and then sends a signal based on radio frequency (radio frequency, RF). Compared with transmission based on multiple carriers, the processing procedure of transmission based on a single carrier at the transmit end further includes DFT and filtering. DFT indicates digital Fourier transform (digital Fourier transform) that transforms a modulation symbol from time domain to frequency domain. Filtering indicates that filtering processing is performed on a signal, such as match filtering (match filtering).

As shown in FIG. 1e, after receiving the signal (the first signal and the second signal) via a radio frequency unit, the receive end sequentially performs FFT, demapping, filtering, inverse discrete Fourier transform (inverse discrete Fourier transform, IDFT), and demodulation, obtains the first data based on the first signal, and obtains the second data based on the second signal. Compared with transmission based on multiple carriers, the processing procedure of transmission based on a single carrier at the receive end further includes filtering and IDFT. IDFT indicates that a frequency-domain signal is transformed to a time-domain signal.

The transmit end 101 may be an entity configured to transmit a signal. The receive end 102 may be an entity configured to receive a signal. Optionally, the transmit end 101 may also have a function of receiving a signal, and the receive end 102 may also have a function of sending a signal.

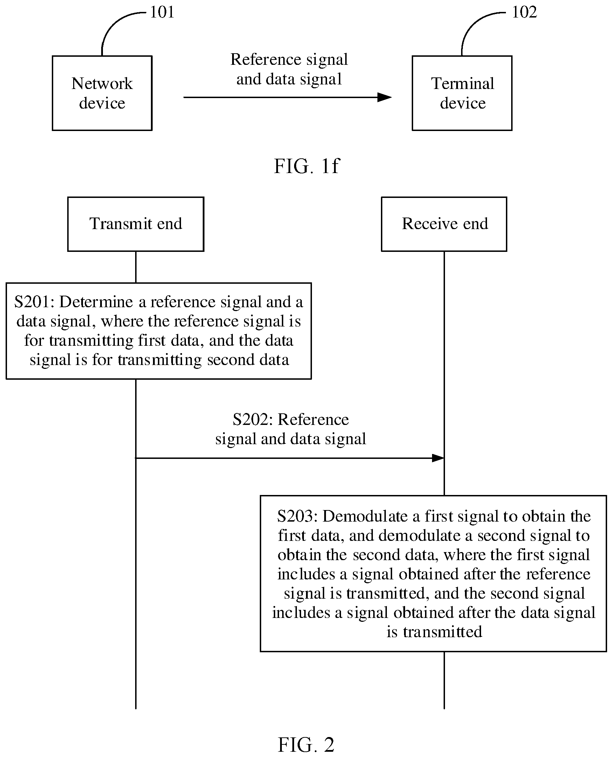

Both the transmit end 101 and the receive end 102 may be a terminal device or a network device. For example, when the transmit end 101 is the network device and the receive end 102 is the terminal device. The schematic diagram of the architecture of the communication system shown in FIG. 1a may be shown in FIG. 1f

The terminal device may be user equipment (user equipment, UE), a remote terminal, a mobile terminal, a wireless communication device, a user apparatus, a mobile station (Mobile Station, MS), a subscriber unit (subscriber unit), a cellular phone (cellular phone), a smart phone (smart phone), a wireless data card, a personal digital assistant (Personal Digital Assistant, PDA for short) computer, a tablet computer, a wireless modem (modem), a handheld device (handset), an in-vehicle device, a laptop computer (laptop computer), a machine type communication (Machine Type Communication, MTC) terminal, or the like. The user equipment may be a mobile phone, a desktop computer, a notebook computer, another wearable device, or the like. The network device may be an access network device, a core network device, or the like. The access network device may include various forms of macro base stations, micro base stations (also referred to as small cells), relay stations, access points, and the like.

Technologies described in embodiments of the application may be used in various communication systems, for example, a fifth generation (fifth generation, 5G) communication system, a new radio (new radio, NR) system of a fifth generation (fifth generation, 5G) access technology, an NR vehicle to everything (vehicle to everything, NR V2X) system, a long term evolution (Long Term Evolution, LTE) and 5G hybrid networking system, a device-to-device (device-to-device, D2D) communication system, a machine-to-machine (machine-to-machine, M2M) communication system, an Internet of Things (Internet of Things, IoT) communication system, or an uncrewed aerial vehicle communication system. Alternatively, the technologies may be further used in a communication system that supports a plurality of wireless technologies, for example, an LTE technology and an NR technology. Alternatively, the technologies may be further used in a system in which a plurality of communication systems are converged. Alternatively, the technologies may be further used in a future evolved communication system, for example, a 6G communication system. Alternatively, the technologies may be further used in a non-terrestrial communication system, for example, a satellite communication system or a high-altitude communication platform. Alternatively, the technologies may be used in the following communication systems: a narrowband internet of things (Narrowband Internet of Things, NB-IoT) system, an enhanced data rates for GSM evolution (Enhanced Data rates for GSM Evolution, EDGE) system, a wideband code division multiple access (Wideband Code Division Multiple Access, WCDMA) system, a code division multiple access 2000 (Code Division Multiple Access, CDMA 2000) system, a time division-synchronous code division multiple access (Time Division-Synchronous Code Division Multiple Access, TD-SCDMA) system, a long term evolution (Long Term Evolution, LTE) system, and a future-oriented communication technology.

It should be noted that names of data, information, a signal, a parameter, and the like mentioned in embodiments of the application are used as examples. The names may be different in different communication systems. This is not limited in embodiments of the application.

It can be understood that the communication system described in embodiments of the application is for describing the technical solutions in embodiments of the application more clearly, but does not limit the technical solutions provided in embodiments of the application. A person skilled in the art may learn that with evolution of a system architecture and emergence of a new service scenario, the technical solutions provided in embodiments of the application is also applicable to a similar technical problem.

The following describes a data transmission method and a communication apparatus provided in the application in detail with reference to the accompanying drawings.

FIG. 2 is a schematic flowchart of a data transmission method according to an embodiment of the application. The method includes but is not limited to the following steps.

Step S201: A transmit end determines a reference signal and a data signal, where the reference signal is for transmitting first data, the data signal is for transmitting second data, a resource element carrying the reference signal and a resource element carrying the data signal belong to a same frequency domain resource assignment, a modulation and coding parameter of the reference signal is smaller than a modulation and coding parameter of the data signal, and the modulation and coding parameter includes one or more of the following: an MCS index, a modulation order, a code rate, or spectral efficiency.

After obtaining a data bit of the first data, the transmit end may process the data bit of the first data according to the procedure shown in FIG. 1b or FIG. 1d, to obtain the reference signal. Similarly, after obtaining a data bit of the second data, the transmit end may process the data bit of the second data according to the procedure shown in FIG. 1b or FIG. 1d, to obtain the data signal.

The resource element (for example, referred to as a resource element A) carrying the reference signal and the resource element (for example, referred to as a resource element B) carrying the data signal belong to the same frequency domain resource assignment. This may indicate that the resource element A and the resource element B belong to a frequency domain resource of the same frequency domain resource assignment, and the same frequency domain resource is a block of frequency domain resource configured based on same control signaling. The control signaling may be, for example, downlink control information (downlink control information, DCI). That the resource element A and the resource element B belong to the same frequency domain resource assignment may further indicate that the resource element A and the resource element B belong to a same RB or a same scheduled bandwidth. The RB is a minimum scheduled unit. The scheduled bandwidth may be a scheduled unit of another granularity. For example, the scheduled bandwidth includes a plurality of RBs. The scheduled bandwidth may indicate a quantity of resource blocks occupied by a PDSCH scheduled by the DCI or a quantity of consecutive resource blocks.

That the resource element A and the resource element B belong to the same RB or the same scheduled bandwidth may indicate that a subcarrier (for example, referred to as a subcarrier 1) carrying the reference signal and a subcarrier (for example, referred to as a subcarrier 2) carrying the data signal belong to the same RB or the same scheduled bandwidth. The data bit of the first data may be mapped to the subcarrier 1 according to a modulation manner 1, and the data bit of the second data may be mapped to the subcarrier 2 according to a modulation manner 2. The modulation manner 1 and the modulation manner 2 may be the same, or may be different. This is not limited in this embodiment of the application.

It can be learned from the foregoing that, for a signal, a smaller modulation and coding parameter of the signal indicates a lower signal-to-noise ratio needed for demodulating the signal at a receive end. The modulation and coding parameter of the reference signal is smaller than the modulation and coding parameter of the data signal, so that a lower signal-to-noise ratio is needed for demodulating the reference signal, a success rate of demodulating the reference signal at the receive end is higher, and data can be successfully transmitted based on the reference signal, thereby helping improve data transmission efficiency.

The modulation and coding parameter of the reference signal is smaller than the modulation and coding parameter of the data signal (that is, the modulation and coding parameter of the reference signal is different from the modulation and coding parameter of the data signal), and the resource element (for example, referred to as the resource element A) carrying the reference signal and the resource element (for example, referred to as the resource element B) carrying the data signal belong to the same frequency domain resource assignment. This may indicate that data (that is, the first data and the second data) of different modulation and coding parameters is transmitted in a same RB or a same scheduled bandwidth. This helps improve the data transmission efficiency.

It should be noted that the modulation and coding parameter of the reference signal is smaller than the modulation and coding parameter of the data signal, which indicates that at least one of an MCS index, a modulation order, a code rate, or spectral efficiency of the reference signal is smaller than a corresponding parameter of the data signal. For example, if the modulation and coding parameter includes the MCS index, the modulation order, the code rate, and the spectral efficiency, an MCS index of the reference signal may be smaller than an MCS index of the data signal, a modulation order of the reference signal may be smaller than a modulation order of the data signal, a code rate of the reference signal may be smaller than a code rate of the data signal, and spectral efficiency of the reference signal may be smaller than spectral efficiency of the data signal. For another example, if the modulation and coding parameter includes the MCS index, the modulation order, and the spectral efficiency, the MCS index of the reference signal may be smaller than the MCS index of the data signal, the modulation order of the reference signal may be smaller than the modulation order of the data signal, and the spectral efficiency of the reference signal may be smaller than the spectral efficiency of the data signal. However, the code rate of the reference signal may be greater than or equal to the code rate of the data signal, or the code rate of the reference signal may be smaller than the code rate of the data signal.

A modulation manner of the reference signal may include but is not limited to the following modulation manners: binary phase shift keying (binary phase shift keying, BPSK), pi/2-BPSK, quadrature phase shift keying (quadrature phase shift keying, QPSK), pi/4 QPSK, 8PSK, and 16 quadrature amplitude modulation (quadrature amplitude modulation, QAM). Correspondingly, the modulation order of the reference signal may be a modulation order corresponding to the modulation manner. Optionally, the code rate of the reference signal may be 1, that is, coding is not performed, and an original data bit is transmitted. Optionally, the code rate of the reference signal may be greater than a first threshold, that is, the reference signal is transmitted at a high code rate. For example, the first threshold may be 0.5. It should be noted that the modulation and coding parameter of the reference signal and the modulation and coding parameter of the data signal in this embodiment of the application may be values in an MCS table shown in Table 1, or may be values in another MCS table (for example, referred to as a new MCS table). For example, a code rate in the new MCS table may include but is not limited to one or more of the following values: 517, 553, 526, 602, 553, 616, 658, 682.5, 711, 754, 797, 841, 885, 916.5, 567, 616, 666, 719, 772, 822, 873, 910, 948, and 1. A modulation order in the new MCS table may include but is not limited to one or more of modulation orders corresponding to the following modulation manners: BPSK, pi/2-BPSK, QPSK, pi/4 QPSK, 8PSK, and 16QAM.

In an implementation, the modulation and coding parameter of the reference signal may be determined based on the modulation and coding parameter of the data signal. Manner 1: There is a one-to-one correspondence between the modulation and coding parameter of the data signal and the modulation and coding parameter of the reference signal. After the modulation and coding parameter of the data signal is determined, the modulation and coding parameter of the reference signal may be determined based on the modulation and coding parameter of the data signal and the one-to-one correspondence.

Manner 2: There is a one-to-many relationship between the modulation and coding parameter of the data signal and the modulation and coding parameter of the reference signal. For example, an example in which the modulation and coding parameter includes the MCS index is used. Refer to Table 2. Table 2 shows a correspondence between the MCS index (indicated by MCS1 in Table 2) of the data signal and the MCS index (indicated by MCS2 in Table 2) of the reference signal. In Table 2, when the MCS index (that is, MCS1) of the data signal is greater than or equal to MCS 11, MCS indexes (that is, MCS2) of a plurality of reference signals correspond to the MCS index of the data signal. For example, in Table 2, when MCS11≤MCS1<MCS12, a value range of MCS2 corresponding to MCS1 is MCS2≤MCS21. Optionally, when a plurality of modulation and coding parameters of reference signals correspond to the modulation and coding parameter of the data signal, a specific modulation and coding parameter to be used as the modulation and coding parameter of the reference signal may be determined from the plurality of modulation and coding parameters based on indication information from a network device.

**Table 2 Correspondence between the MCS index of the data signal and the MCS index of the reference signal**

| MCS index (MCS1) of the data signal | MCS index (MCS2) of the reference signal |
|---|---|
| MCS1<MCS11 | The reference signal does not carry data. |

(continued)

| MCS index (MCS1) of the data signal | MCS index (MCS2) of the reference signal |
|---|---|
| MCS11≤MCS1<MCS12 | MCS2≤MCS21 |
| MCS12≤MCS1<MCS13 | MCS2≤MCS22 |
| ... | ... |
| MCS1n≤MCS1<MCS1n | MCS2≤MCS2(n-1) |
| MCS1n≤MCS1 | MCS2≤MCS2n |

**Table 3 Correspondence between the MCS index of the reference signal and the MCS index of the data signal**

| MCS index (MCS2) of the reference signal | MCS index (MCS1) of the data signal |
|---|---|
| MCS2<MCS11 | The reference signal does not carry data. |
| MCS11<MCS2<MCS12 | MCS1≤MCS21 |
| MCS12≤MCS2<MCS13 | MCS1≤MCS22 |
| ... | ... |
| MCS1n≤MCS2<MCS1n | MCS1≤MCS2(n-1) |
| MCS1n≤MCS2 | MCS1≤MCS2n |

In another implementation, the modulation and coding parameter of the data signal may be determined based on the modulation and coding parameter of the reference signal. Manner 1: There is a one-to-one correspondence between the modulation and coding parameter of the reference signal and the modulation and coding parameter of the data signal. After the modulation and coding parameter of the reference signal is determined, the modulation and coding parameter of the data signal may be determined based on the modulation and coding parameter of the reference signal and the one-to-one correspondence. Manner 2: There is a one-to-many relationship between the modulation and coding parameter of the reference signal and the modulation and coding parameter of the data signal. For example, an example in which the modulation and coding parameter includes the MCS index is used. Refer to Table 3. Table 3 shows a correspondence between the MCS index (indicated by MCS2 in Table 3) of the reference signal and the MCS index (indicated by MCS1 in Table 3) of the data signal.

In Table 3, when the MCS index (that is, MCS2) of the reference signal is greater than or equal to MCS11, MCS indexes (that is, MCS1) of a plurality of data signals correspond to the MCS index of the reference signal. For example, in Table 3, when MCS11≤MCS2<MCS12, a value range of MCS1 corresponding to MCS2 is MCS1≤MCS21. Optionally, when a plurality of modulation and coding parameters of data signals correspond to the modulation and coding parameter of the reference signal, a specific modulation and coding parameter to be used as the modulation and coding parameter of the data signal may be determined from the plurality of modulation and coding parameters based on indication information from a network device.

In Table 2, MCS11, MCS12, MCS13, ..., MCS1n may be values of the MCS indexes (that is, MCS1) of the data signals, and MCS21, MCS22, ..., MCS2n may be values of the MCS indexes (that is, MCS2) of the reference signals. In Table 3, MCS11, MCS12, MCS13, ..., MCS1n may be values of the MCS indexes (that is, MCS2) of the reference signals, and MCS21, MCS22, ..., MCS2n may be values of the MCS indexes (that is, MCS1) of the data signals. Optionally, in Table 2 and Table 3, the values of MCS11, MCS12, MCS13, ..., MCS1n, and the values of MCS21, MCS22, ..., and MCS2n may be configured by the network device, or may be reported by a terminal device, or may be agreed on in a protocol. This is not limited in this embodiment of the application. The protocol may be indicated by a protocol between the terminal device and the network device. The network device or the terminal device may agree on that the code rate of the reference signal is 1, or the network device configures the code rate of the reference signal to 1.

Optionally, in Table 2 and Table 3, the value of MCS1 and the value of MCS2 may be values of MCS indexes in a same MCS table, or may be values of MCS indexes in different MCS tables. This is not limited in this embodiment of the application. For example, in Table 2 and Table 3, the value of MCS1 and the value of MCS2 may be the values of the MCS indexes in the MCS table shown in Table 1, or may be values in the new MCS table. For another example, in Table 2, the value of MCS1 and the value of MCS2 may be the values of the MCS indexes in the MCS table shown in Table 1, and in Table 3, the value of MCS1 and the value of MCS2 may be the values in the new MCS table. Alternatively, in Table 3, the value of MCS1 and the value of MCS2 may be the values of the MCS indexes in the MCS table shown in Table 1, and in Table 2, the value of MCS1 and the value of MCS2 may be the values in the new MCS table.

It should be noted that, in Table 2 and Table 3, the examples in which the modulation and coding parameters includes the MCS indexes are used. The MCS indexes in Table 2 and Table 3 may also be replaced with code rates, modulation orders (or modulation manners), or spectral efficiency. For example, the MCS indexes in Table 2 are replaced with modulation manners. When the modulation manner used for the data signal is 16QAM, the modulation manner that may be used for the reference signal is QPSK. When the modulation manner used for the data signal is 64QAM, the modulation manner used for the reference signal may be 16QAM or 8PSK.

Optionally, the correspondences shown in Table 2 and Table 3 may be configured based on radio resource control (radio resource control, RRC) signaling (or media access control control element (media access control control element, MAC-CE) signaling) and DCI signaling. For example, some correspondences are configured based on the RRC signaling (or the MAC-CE signaling), and the other correspondences are configured based on the DCI. For another example, an MCS table is configured based on the RRC signaling (or the MAC-CE signaling), and MCS1 is configured as an MCS index in the MCS table and MCS2 is configured as an MCS index in the MCS table based on the DCI. In this manner, signaling overheads for configuring Table 2 and Table 3 can be reduced. The MAC-CE signaling is a type of higher layer signaling transmitted on a data channel.

In an implementation, the modulation and coding parameter of the reference signal may be determined based on one or more of the following parameters: the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals included in a reference signal block to which the reference signal belongs, a data volume of the first data, or a quantity of reference signal blocks.

For content of determining the modulation and coding parameter of the reference signal based on the modulation and coding parameter of the data signal, refer to the foregoing descriptions. Details are not described herein again. The quantity of resource elements occupied by the second data may indicate a segment of bandwidth in frequency domain, and may indicate a period of time in time domain. The time domain density of the reference signal may indicate a quantity of time domain symbols on which there is one reference signal. For example, if the time domain density of the reference signal is 4, it may indicate that there is one reference signal on every four time domain symbols. The time domain symbol may be an OFDM symbol. The frequency domain density of the reference signal may indicate a quantity of RBs on which there is one reference signal. For example, if the frequency domain density is 4, it may indicate that there is one reference signal on every four RBs in the scheduled bandwidth. The quantity of reference signals may indicate a total quantity of reference signals for transmitting the first data, and the quantity may be one or more. One reference signal block may include one or more reference signals. The quantity of reference signal blocks may indicate a total quantity of reference signal blocks for transmitting the first data, and the quantity may be one or more. The data volume of the first data may be a quantity of bits of the first data.

Optionally, an example in which the modulation and coding parameter includes the spectral efficiency is used. The spectral efficiency of the reference signal may be determined based on the quantity of reference signals and a quantity of bits of data (that is, the first data) transmitted based on the reference signal. In an implementation, the quantity of reference signals may be determined in the following manner: The quantity of reference signals is determined based on the quantity (for example, a bandwidth of the second data) of resource elements (or modulation symbols) occupied by the second data and the frequency domain density of the reference signal. For example, if the bandwidth of the second data is 60 RBs, there is one reference signal RE on two RBs (that is, the frequency domain density of the reference signal is 2), duration of a transport block of a PDSCH carrying the second data is an entire slot, and one slot includes 14 symbols, a quantity of REs of the reference signal of the PDSCH in the entire slot is 60/2* 14=420 REs. If the quantity of bits of the first data is 100 bits, and a modulation manner of the reference signal is QPSK (that is, information of two bits may be transmitted based on one RE), the spectral efficiency of the reference signal is 100/(420*2)=0.119.

In another implementation, the quantity of reference signals may be determined in the following manner: The quantity of reference signals is determined based on the quantity (for example, a bandwidth of the second data and duration of the second data) of resource elements (or modulation symbols) occupied by the second data and the frequency domain density of the reference signal. For example, if the bandwidth of the second data is 60 RBs, there is one reference signal RE on two RBs, duration (duration of the second data) of a transport block of a PDSCH carrying the second data is 11 symbols, a quantity of REs of the reference signal of the PDSCH in the entire slot may be determined as 60/2*11=330 REs. If the quantity of bits of the first data is 100 bits, and a modulation manner of the reference signal is QPSK (that is, information of two bits may be transmitted based on one RE), the spectral efficiency of the reference signal is 100/(330*2)=0.152.

Optionally, when the quantity of reference signals is smaller than a second threshold, or a data volume of data (that is, the first data) transmitted based on the reference signal is smaller than a third threshold, the first data may be transmitted by using a sequence, that is, the first data is not coded. Each reference signal sequence may indicate one piece of first data. Optionally, when the quantity of reference signals is greater than or equal to the second threshold, or a data volume of data (that is, the first data) transmitted based on the reference signal is greater than or equal to the third threshold, the reference signal (or the first data) may be transmitted at a high code rate. In this case, the data volume of the first data transmitted based on the reference signal is large, and a coding gain is high when the first data is transmitted at the high code rate.

Optionally, if the modulation and coding parameter of the reference signal is determined when power of the data signal is the same as the power of the reference signal, the modulation and coding parameter of the reference signal may be increased when the power of the reference signal is increased. Optionally, if the power of the reference signal is increased by M times, the modulation and coding parameter of the reference signal may be increased by K. For example, if the modulation and coding parameter includes an MCS index, M=2, and K=3, when the power of the reference signal is increased by two times, the MCS index of the reference signal may be increased by three levels. One MCS index may be understood as one level. Alternatively, in Table 2 and Table 3, MCS11, MCS12, MCS13, ..., and MCS1n are separately one level, and MCS11 is one level lower than MCS12. Values of M and K may be configured based on the RRC signaling (or the MAC-CE signaling), or may be agreed on in a protocol. This is not limited in this embodiment of the application.

Step S202: The transmit end sends the reference signal and the data signal.

After determining the reference signal and the data signal, the transmit end may send the reference signal and the data signal based on radio frequency.

In this embodiment of the application, the data signal may be scheduled through a control channel, and the reference signal may be scheduled through a control channel or a data channel. For example, the reference signal may be scheduled based on the DCI or the MAC-CE signaling, and the MAC-CE signaling is transmitted through a PDSCH. Optionally, the reference signal and the data signal may be scheduled based on same DCI. Optionally, a range of the modulation and coding parameter of the reference signal may be configured based on the RRC signaling, the range of the modulation and coding parameter of the reference signal may be configured based on the MAC-CE signaling, or the range of the modulation and coding parameter of the reference signal may be agreed on in a protocol.

In an implementation, a resource block carrying the reference signal may further carry first information. The reference signal is transmitted based on a first transport block, and the first information is transmitted based on a second transport block. In other words, the reference signal may exist as an independent transport block, and other information (that is, the first information) carried in the resource block carrying the reference signal and the reference signal are transmitted based on different transport blocks. This manner helps avoid interference of the first information to the reference signal. In an implementation, the first transport block and the second transport block may be a same transport block. In other words, the other information (that is, the first information) carried in the resource block carrying the reference signal and the reference signal may be transmitted based on a same transport block, thereby helping reduce used transport block resources. That the other information (that is, the first information) carried in the resource block carrying the reference signal and the reference signal are transmitted based on a same transport block may be understood as: A subcarrier occupied by the reference signal and another subcarrier on which data is transmitted in the resource block belong to a same transport block, or the resource element occupied by the reference signal and another resource element on which data is transmitted in the resource block belong to a same transport block.

Optionally, when the reference signal is transmitted based on an independent transport block (namely, the first transport block), a field may be added for scheduling the first transport block. Optionally, if the reference signal is scheduled based on the DCI, a field may be added to the DCI. For example, the added field is as follows:

- Modulation and/or coding scheme - x1 bits
- New data indicator - x2 bit
- Redundancy version - x3 bits

Optionally, when the first transport block and the second transport block are the same transport block, a scheduling parameter for scheduling the first transport block may be totally different from or partially different from a scheduling parameter for scheduling the second transport block. For example, the scheduling parameter includes a modulation and coding parameter, and a modulation and coding parameter in the scheduling parameter for scheduling the first transport block is different from a modulation and coding parameter in the scheduling parameter for scheduling the second transport block.

In an implementation, after determining the modulation and coding parameter of the reference signal, the transmit end may send indication information. The indication information indicates the modulation and coding parameter of the reference signal. Correspondingly, the receive end obtains the indication information, and determines the modulation and coding parameter of the reference signal based on the indication information. The indication information may be DCI, RRC, or a MAC-CE. The indication information may explicitly indicate or implicitly indicate the modulation and coding parameter of the reference signal. Explicit indication means that the indication information includes the modulation and coding parameter of the reference signal. Implicit indication means that the indication information includes information that has a correspondence with the modulation and coding parameter of the reference signal, and the modulation and coding parameter of the reference signal may be determined based on the information and the correspondence. For example, an example in which the modulation and coding parameter includes the MCS index is used. The indication information includes an MCS index 1, and the indication information indicates that the MCS index of the reference signal is 2 greater than the carried MCS index 1, the MCS index of the reference signal is 3. In an implementation, the modulation and coding parameter may include at least one of the MCS index, an MCS level, the modulation order, the code rate, or the spectral efficiency. An example in which the modulation and coding parameter includes the MCS level is used. The indication information includes an MCS level 1, and the indication information indicates that the MCS index of the reference signal is K greater than the carried MCS level 1. If K=2, the MCS level of the reference signal is 3. For related content of the MCS level, refer to the foregoing descriptions. Details are not described herein again.

Step S203: The receive end demodulates a first signal to obtain the first data, and demodulate a second signal to obtain the second data, where the first signal includes a signal obtained after the reference signal is transmitted, and the second signal includes a signal obtained after the data signal is transmitted.

It should be noted that after the reference signal and the data signal that are sent by the transmit end are transmitted, the reference signal and the data signal may change at the receive end. Therefore, the receive end receives the signal obtained after the reference signal is transmitted and the signal obtained after the data signal is transmitted. The receive end may obtain the first data by demodulating the signal obtained after the reference signal is transmitted, and may obtain the second data by demodulating the signal obtained after the data signal is transmitted.

In an implementation, the reference signal is for transmitting the first data, and may be further used as a reference signal of the data signal. To be specific, the signal (that is, the first signal) obtained after the reference signal is transmitted is demodulated, and an obtained estimation result of phase noise may be used to assist in demodulation of the signal (that is, the second signal) obtained after the data signal is transmitted. For example, the receive end demodulates the first signal to obtain the estimation result of phase noise. Then, the receive end may perform phase noise compensation on the second signal based on the estimation result of phase noise to obtain the second data through demodulation.

The reference signal mentioned in this embodiment of the application may be a phase tracking reference signal (phase tracking reference signal, PTRS), a demodulated reference signal (demodulated reference signal, DMRS), or another reference signal. This is not limited in this embodiment of the application.

Optionally, when the reference signal supports multi-user transmission, orthogonal cover code (orthogonal cover code, OCC) information may be used for transmission. When the reference signal supports multi-user transmission, reference signals in a same group may occupy a same RE resource. In this case, reference signals corresponding to different users may be distinguished based on the OCC information. For a single user, one OCC sequence is transmitted at N1 OCC time domain positions, and N2 users have N2 sequences. For example, when two users are supported, there may be two OCC sequences, and the two OCC sequences each include two time-frequency positions. The two OCC sequences are respectively [+1,+1] and [+1,-1]. When four users are supported, there may be four OCC sequences, and the four OCC sequences each include four time-frequency positions. The four OCC sequences are respectively [+1,+1,+1,+1], [+1,-1,+1,-1], [+1,+1,-1,-1], and [+1,-1,-1,+1]. +1 and -1 in the OCC sequences each indicate a position of one resource element. Optionally, in an OCC pattern, same data may be transmitted based on the reference signal. For example, two resource elements in the OCC sequence [+1,+1] are for transmitting a same bit, and four resource elements in the OCC sequence [+1,+1,+1,+1] are for transmitting a same bit. A plurality of positions are for transmitting same information of the reference signal, so that a signal-to-noise ratio of information transmission can be improved.

In an implementation, the orthogonal cover code (orthogonal cover code, OCC) information of the reference signal (for example, the PTRS) in this embodiment of the application may be the same as OCC information of the DMRS. The OCC information of the PTRS is the same as the OCC information of the DMRS, and may indicate that an OCC pattern (or referred to as a pattern) of the PTRS is the same as an OCC pattern of the DMRS. In this manner, the OCC pattern of the PTRS may not need to be separately indicated, thereby helping reduce used resources. Optionally, for a block pilot, the OCC pattern of the PTRS may be the same as the OCC pattern of the DMRS. Optionally, a quantity of REs of consecutive OCC of the reference signal may be determined based on a frequency division scale of OCC of the DMRS. For example, for a DMRS4 port, the DMRS needs two REs as one group of OCC, and there are two groups of OCC in total. Therefore, four REs are needed as one block. Similarly, for the block pilot of the reference signal, two REs may also be used as one group of OCC, and there are two groups of OCC in total. Therefore, a quantity of REs in a reference signal block is 4.

In this embodiment of the application, data information (that is, the first data) is transmitted based on the reference signal, thereby helping improve the data transmission efficiency. The modulation and coding parameter of the reference signal is smaller than the modulation and coding parameter of the data signal, so that the low signal-to-noise ratio is needed for demodulating the reference signal, the success rate of demodulating the reference signal at the receive end is high, and the data can be successfully transmitted based on the reference signal, thereby helping improve the data transmission efficiency.

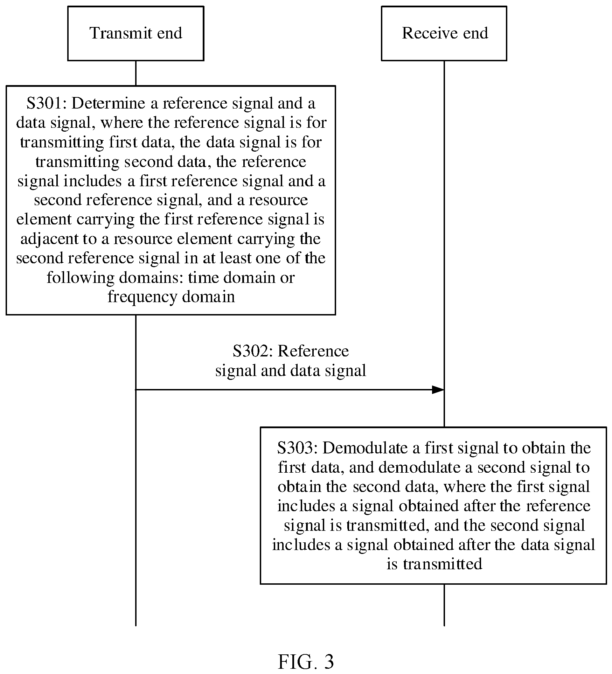

FIG. 3 is a schematic flowchart of another data transmission method according to an embodiment of the application. The method describes content of transmitting first data based on a plurality of reference signals. The method may include, but is not limited to, the following steps.

Step S301: A transmit end determines a reference signal and a data signal, where the reference signal is for transmitting first data, the data signal is for transmitting second data, a resource element carrying the reference signal and a resource element carrying the data signal belong to a same frequency domain resource assignment, a modulation and coding parameter of the reference signal is smaller than a modulation and coding parameter of the data signal, the modulation and coding parameter includes one or more of the following: an MCS index, a modulation order, a code rate, or spectral efficiency, the reference signal includes a first reference signal and a second reference signal, a resource element carrying the first reference signal is adjacent to a resource element carrying the second reference signal in at least one of the following domains: time domain or frequency domain, the first reference signal is a reference signal having a largest modulation and coding parameter in the reference signal for transmitting the first data, and the second reference signal is a reference signal having a smallest modulation and coding parameter in the reference signal for transmitting the first data.

In this embodiment of the application, the first data may be transmitted based on one or more reference signals. In the embodiment corresponding to FIG. 3, an example in which the first data is transmitted based on a plurality of reference signals is used for description.

It should be noted that a receive end may demodulate reference signals in ascending order of modulation and coding parameters. For two resource elements that are adjacent in time domain and/or frequency domain, an estimation result of phase noise of a reference signal carried on one of the two resource elements may be used to determine an estimation result of phase noise of a reference signal carried on the other resource element. For example, a resource element 1 and a resource element 2 are adjacent in time domain, the resource element 1 carries a reference signal 1, and the resource element 2 carries a reference signal 2. In this case, an estimation result of phase noise of the reference signal 1 may be used to determine an estimation result of phase noise of the reference signal 2. This helps improve accuracy of the estimation result of the phase noise the reference signal 2, and helps improve phase noise estimation performance.

When the first data is transmitted based on at least the first reference signal and the second reference signal, if the first reference signal is the reference signal having the largest modulation and coding parameter in the reference signal for transmitting the first data, and the second reference signal is the reference signal having the smallest modulation and coding parameter in the reference signal for transmitting the first data, the resource element carrying the first reference signal may be adjacent to the resource element carrying the second reference signal in at least one of the following domains: the time domain or the frequency domain. The reference signal for transmitting the first data includes at least the first reference signal and the second reference signal, and modulation and coding parameters of the reference signals for transmitting the first data may be the same or different. It can be learned from the foregoing that, for a signal, a smaller modulation and coding parameter of the signal indicates a lower signal-to-noise ratio needed for demodulating the signal at the receive end. The second reference signal is the reference signal having the smallest modulation and coding parameter in the reference signal for transmitting the first data. Therefore, a lower signal-to-noise ratio is needed for demodulating the second reference signal, and a success rate of demodulating the second reference signal at the receive end is higher, so that an estimation result on phase noise of the second reference signal can be successfully obtained. The resource element carrying the first reference signal is adjacent to the resource element carrying the second reference signal in at least one of the following domains: time domain or frequency domain. Therefore, the estimation result on the phase noise of the second reference signal may be used to determine an estimation result on phase noise of the first reference signal. This manner helps improve accuracy of the estimation result of the phase noise of the second reference signal, and helps improve phase noise estimation performance.

It should be noted that it is merely an example that the first reference signal is the reference signal having the largest modulation and coding parameter in the reference signal for transmitting the first data, and the second reference signal is the reference signal having the smallest modulation and coding parameter in the reference signal for transmitting the first data. In a specific implementation, the modulation and coding parameter of the reference signal carried on the adjacent resource element in at least one of the following domains: the time domain or the frequency domain only needs to include a smaller modulation and coding parameter and a larger modulation and coding parameter. In this way, an estimation result of phase noise of a reference signal having the smaller modulation and coding parameter may be used for estimation on phase noise of a reference signal with the larger modulation and coding parameter. For example, when the second reference signal is the reference signal having the smallest modulation and coding parameter in the reference signal for transmitting the first data, the first reference signal may also be a reference signal having a second largest modulation and coding parameter in the reference signals for transmitting the first data.

The first data may be transmitted based on one or more reference signal blocks, and each reference signal block may include one or more reference signals. In an implementation, the first data may be transmitted based on a plurality of reference signal blocks. Each reference signal block may include a plurality of reference signals, and each reference signal block includes at least two reference signals that have different modulation and coding parameters. This manner helps improve efficiency of transmitting data based on the reference signal.

In an implementation, the first data may be transmitted based on a first reference signal block and a second reference signal block. For each reference signal in the first reference signal block, a modulation and coding parameter of the reference signal may be the same as a modulation and coding parameter of a corresponding reference signal in the second reference signal block. It may be understood that an arrangement of modulation and coding parameters of the first reference signal block is the same as that of the modulation and coding parameters of the second reference signal block. In this manner, only a modulation and coding parameter of a reference signal in one reference signal block (for example, the first reference signal block) needs to be indicated (that is, an arrangement of modulation and coding parameters of one reference signal block is indicated). There is no need to indicate a modulation and coding parameter of a reference signal in another reference signal block (for example, the second reference signal block), thereby helping reduce used resources. The first reference signal block (or the second reference signal block) may include reference signals with different modulation and coding parameters, or may include reference signals with a same modulation and coding parameter. The modulation and coding parameters of the reference signals in the first reference signal block (or the second reference signal block) may be different or may be the same. This is not limited in this embodiment of the application.

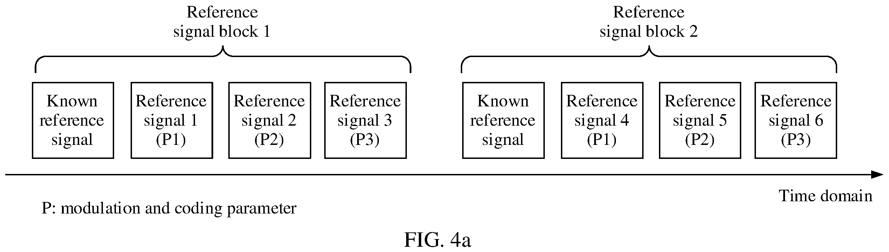

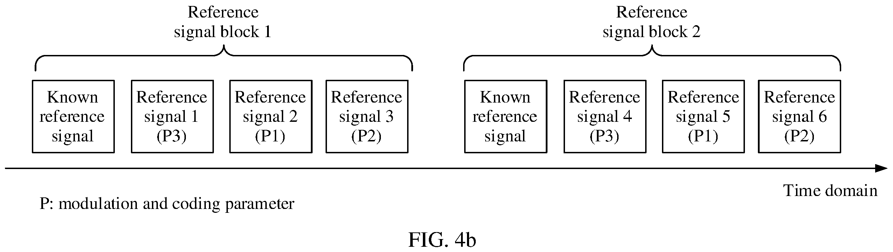

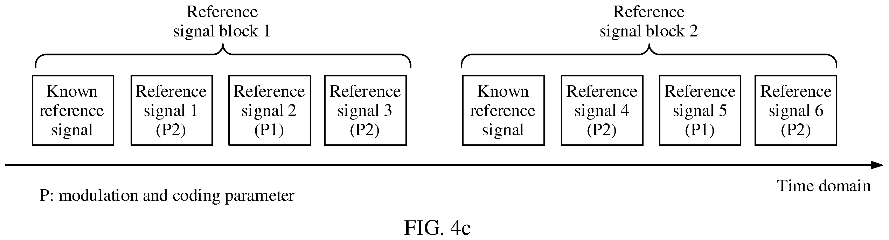

For example, refer to three arrangement manners of modulation and coding parameters of reference signal blocks shown in FIG. 4a, FIG. 4b, and FIG. 4c. P indicates a modulation and coding parameter, and a number following P indicates a size of the modulation and coding parameter. For example, P1<P2<P3 indicates that a modulation and coding parameter of a reference signal 1 is smaller than a modulation and coding parameter of a reference signal 2, and the modulation and coding parameter of the reference signal 2 is smaller than a modulation and coding parameter of a reference signal 3. It should be noted that, in time domain, a small block indicates a resource element carrying a reference signal. A known reference signal may also be replaced with a reference signal whose modulation and coding parameter (for example, a modulation and coding parameter is 0) is another value, and the known reference signal does not carry data information. As shown in FIG. 4a, FIG. 4b, and FIG. 4c, arrangements of modulation and coding parameters of reference signal blocks are the same.

As shown in FIG. 4a, in a reference signal block, reference signals are arranged in ascending order of modulation and coding parameters. In this arrangement manner, the receive end may first estimate phase noise of a reference signal having a smaller modulation and coding parameter, and then estimate phase noise of another reference signal having a larger modulation and coding parameter. In a time domain direction, a modulation and coding parameter of a previous reference signal is smaller. Therefore, phase noise of a current reference signal may be estimated based on an estimation result of phase noise of the previous reference signal, thereby helping improve phase noise estimation performance.

As shown in FIG. 4b, in a reference signal block, a resource element (for example, a resource element carrying a reference signal 3) carrying a reference signal having a larger modulation and coding parameter is adjacent to a resource element (for example, a resource element carrying a reference signal 1) carrying a reference signal having a smaller modulation and coding parameter in time domain. Therefore, when phase noise estimation of the reference signal having the larger modulation and coding parameter is performed, an estimation result of phase noise of the reference signal having the smaller modulation and coding parameter may be used, thereby helping improve the phase noise estimation performance.

As shown in FIG. 4c, a reference signal block may include reference signals having a same modulation and coding parameter, for example, a reference signal 1 and a reference signal 3, or may include reference signals having different modulation and coding parameters, for example, a reference signal 1 and a reference signal 2.

It should be noted that values of P1, P2, and P3 in FIG. 4a, FIG. 4b, and FIG. 4c are not necessarily 1, 2, and 3. P1, P2, and P3 indicate a value relationship between modulation and coding parameters. In a specific implementation, the values of P1, P2, and P3 may be configured by a network device, or may be agreed on in a protocol, or may be reported by a terminal device. This is not limited in this embodiment of the application.

In this embodiment of the application, an arrangement of modulation and coding parameters of reference signal blocks may be indicated in the following manners. The following manners are described by using an example in which the arrangement of the modulation and coding parameters of the reference signal blocks in FIG. 4a is indicated.

In a first manner, a protocol specifies a pattern of modulation and coding parameters shown in FIG. 4a, that is, P1<P2<P3. In this way, the network device only needs to indicate the values of P1, P2, and P3. Optionally, the values of P1, P2, and P3 may be indicated in a differential manner. Optionally, the network device may send only a modulation and coding parameter of a specific reference signal in a reference signal block, and modulation and coding parameters of other reference signals may be determined in the differential manner. For example, if a value of a largest modulation and coding parameter (that is, P3) sent by the network device is 6, and a differential value is 1, P2=5, and P1=4.

In a second manner, the network device indicates values of modulation and coding parameters of all reference signals in a reference signal block.

In a third manner, a protocol specifies a pattern of modulation and coding parameters shown in FIG. 4a, that is, P1<P2<P3, and indicates values of modulation and coding parameters of some reference signals in a reference signal block, and default values are used for modulation and coding parameters of other reference signals. For example, the values of P2 and P3 are indicated. A default value is used for P1, and the default value may be, for example, 1. The default value can be specified in the protocol.

In another implementation, an arrangement of modulation and coding parameters of a first reference signal block is different from an arrangement of modulation and coding parameters of a second reference signal block. For example, for each reference signal in the first reference signal block, a modulation and coding parameter of the reference signal may be different from a modulation and coding parameter of a corresponding reference signal in the second reference signal block. Alternatively, for some reference signals in the first reference signal block, modulation and coding parameters of the reference signals are the same as modulation and coding parameters of corresponding reference signals in the second reference signal block. For other reference signals in the first reference signal block, modulation and coding parameters of the reference signals are different from modulation and coding parameters of corresponding reference signals in the second reference signal block.

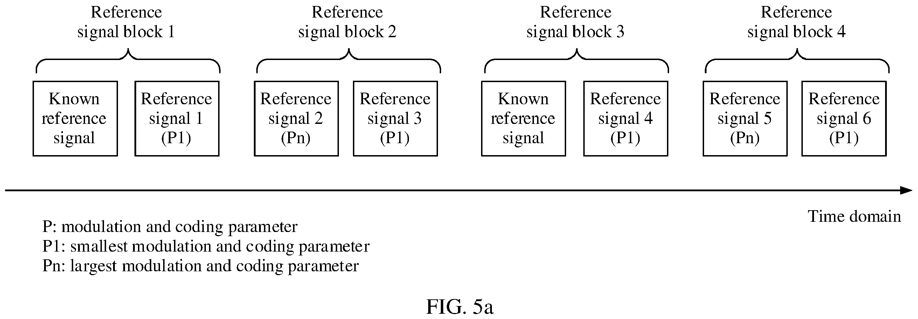

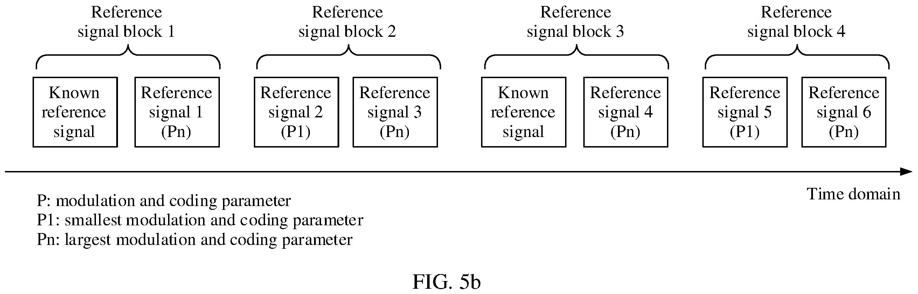

For example, refer to two arrangement manners of modulation and coding parameters of reference signal blocks shown in FIG. 5a and FIG. 5b. As shown in FIG. 5a and FIG. 5b, modulation and coding parameters of a reference signal block 1 and a reference signal 2 are not totally the same. Pn indicates a modulation and coding parameter greater than P1. In FIG. 5a and FIG. 5b, an example in which Pn is a largest configurable modulation and coding parameter is used. As shown in FIG. 5a, in a reference signal block, reference signals are arranged in ascending order of modulation and coding parameters. In this arrangement manner, the receive end may first estimate phase noise of a reference signal having a smaller modulation and coding parameter, and then estimate phase noise of another reference signal having a larger modulation and coding parameter based on an estimation result of phase noise, thereby helping improve phase noise estimation performance. As shown in FIG. 5b, in a reference signal block, a resource element (for example, a resource element carrying a reference signal 1) carrying a reference signal having a largest modulation and coding parameter is adj acent to a resource element (for example, a resource element carrying a reference signal 2) carrying a reference signal having a smallest modulation and coding parameter in time domain. Therefore, when phase noise estimation of the reference signal 1 is performed, an estimation result of phase noise of the reference signal 2 may be used, thereby helping improve the phase noise estimation performance.

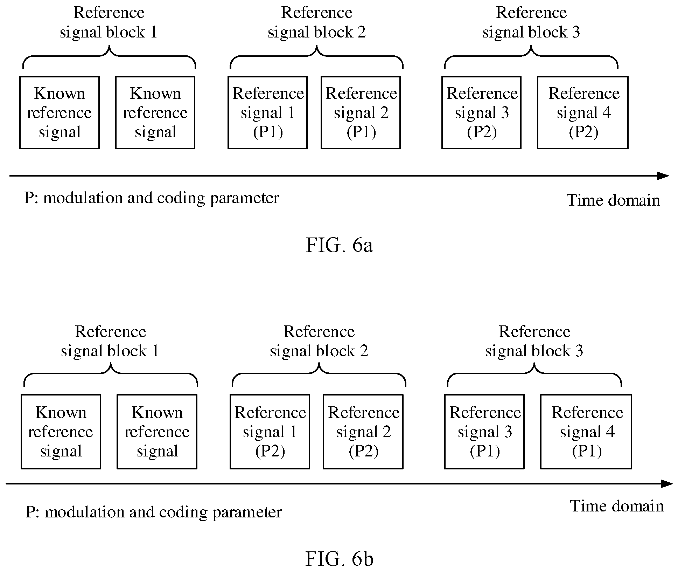

In an implementation, first data may be transmitted based on a third reference signal block and a fourth reference signal block. A modulation and coding parameter of each reference signal in the third reference signal block is a first modulation and coding parameter. A modulation and coding parameter of each reference signal in the fourth reference signal block is a second modulation and coding parameter. In other words, the third reference signal block and the fourth reference signal block each include only reference signals having a same modulation and coding parameter, and reference signals in different reference signal blocks (that is, the third reference signal block and the fourth reference signal block) have different modulation and coding parameters. Each reference signal block may include one or more reference signals. In this manner, only one modulation and coding parameter needs to be indicated for one reference signal block, and there is no need to indicate a modulation and coding parameter for each reference signal in the reference signal block, thereby helping reduce used resources, and helping improve efficiency of transmitting data based on the reference signal. For example, refer to two arrangement manners of modulation and coding parameters of reference signal blocks shown in FIG. 6a and FIG. 6b. As shown in FIG. 6a and FIG. 6b, all reference signals in a reference signal block have a same modulation and coding parameter, and reference signals in different reference signal blocks have different modulation and coding parameters.

In an implementation, modulation and coding parameters of reference signals may be periodically arranged, and a minimum time domain unit of a period may be a reference signal. For example, in FIG. 4a, a period is four reference signals. In FIG. 5a, a period is also four reference signals. In FIG. 5a, a DFT modulation symbol block for transmitting first data includes eight reference signals. The DFT modulation symbol block includes two periods, and one period includes four reference signals.

It should be noted that, in the foregoing FIG. 4a to FIG. 6b, an arrangement of modulation and coding parameters of reference signals in time domain is used as an example. In a specific implementation, the modulation and coding parameters of reference signals may be alternatively arranged in frequency domain, or the modulation and coding parameters of the reference signals may be alternatively arranged in both time domain and frequency domain.

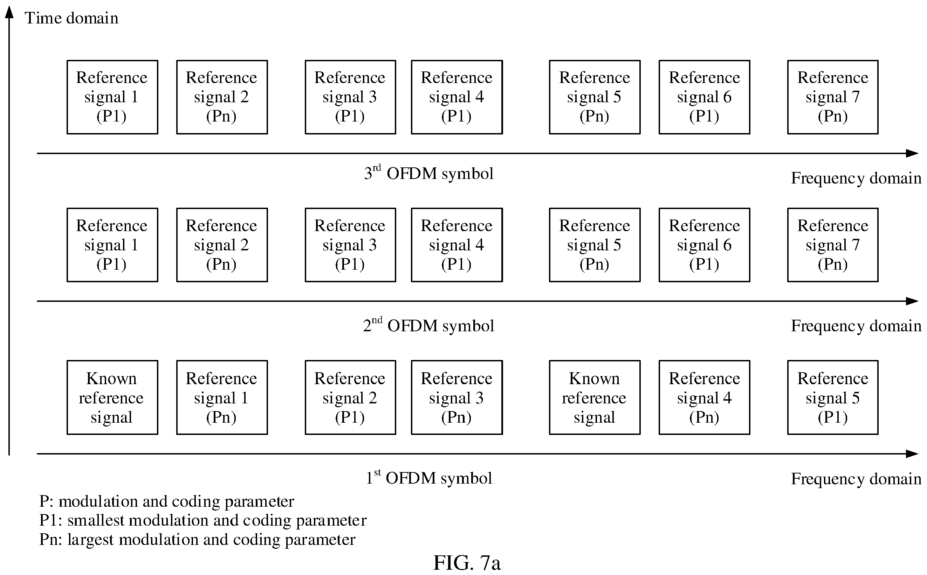

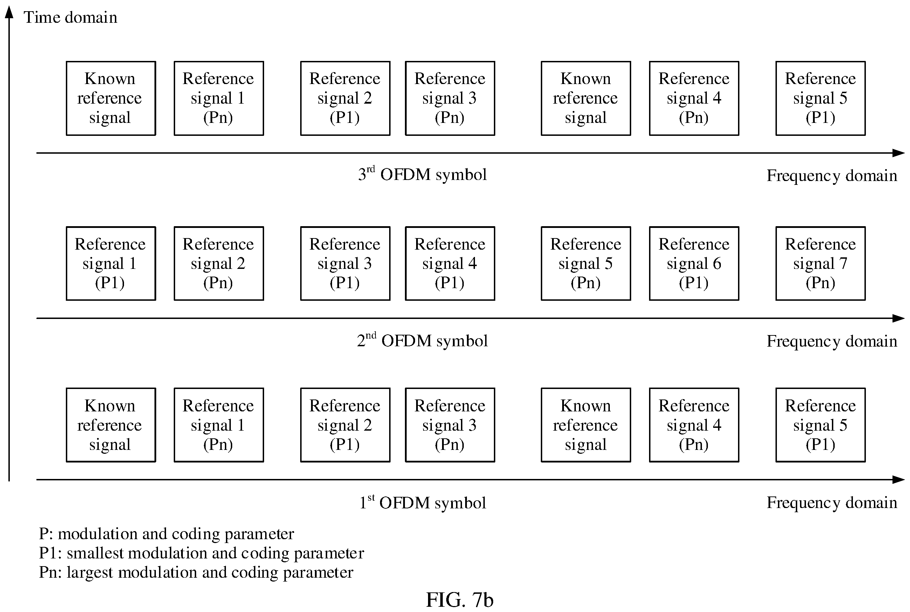

For example, refer to two arrangement manners of modulation and coding parameters of reference signal blocks shown in FIG. 7a and FIG. 7b. As shown in FIG. 7a, in scheduled time domain time of a PDSCH transport block, an arrangement of modulation and coding parameters of reference signals transmitted on a first OFDM symbol is different from an arrangement of modulation and coding parameters of reference signals on another time domain symbol. For example, a first reference signal on the first OFDM symbol is a known reference signal. This manner facilitates obtaining an estimation result of phase noise of a reference signal transmitted on the first OFDM symbol, and the estimation result of the phase noise of the reference signal transmitted on the first OFDM symbol can be used to estimate phase noise of a reference signal transmitted on a non-first OFDM symbol, thereby helping improve phase noise estimation performance. As shown in FIG. 7b, modulation and coding parameters of reference signals are periodically arranged in time domain, and a period is two OFDM symbols. Optionally, the period may be configured by a network device, agreed on between a terminal device and the network device, or may be reported by the terminal device. In FIG. 7b, the period of two OFDM symbols is used as an example. In a specific implementation, the period may be another period. This is not limited in this embodiment of the application.

It should be noted that for a remaining process of performing the step S301, refer to the specific description of the step S201 in FIG. 2. Details are not described herein.

Step S302: The transmit end sends the reference signal and the data signal.

Step S303: The receive end demodulates a first signal to obtain the first data, and demodulate a second signal to obtain the second data, where the first signal includes a signal obtained after the reference signal is transmitted, and the second signal includes a signal obtained after the data signal is transmitted.

It should be noted that, for a process of performing the step S302 and the step S303, refer to the specific descriptions of the step S202 and the step S203 in FIG. 2. Details are not described herein again.

In this embodiment of the application, data information (that is, the first data) is transmitted based on the reference signal, thereby helping improve data transmission efficiency. The resource element carrying the first reference signal is adjacent to the resource element carrying the second reference signal in at least one of the following domains: time domain or frequency domain, so that the estimation result on the phase noise of the second reference signal may be used to determine the estimation result on the phase noise of the first reference signal. This manner helps improve the accuracy of the estimation result of the phase noise of the second reference signal, and helps improve the phase noise estimation performance.

In the foregoing embodiments provided in the application, the method provided in embodiments of the application is described. To implement the functions in the method provided in the foregoing embodiments of the application, the transmit end and the receive end each may include a hardware structure and a software module, to implement the functions in a form of the hardware structure, the software module, or a combination of the hardware structure and the software module. One of the foregoing functions may be performed through the hardware structure, the software module, or the combination of the hardware structure and the software module.

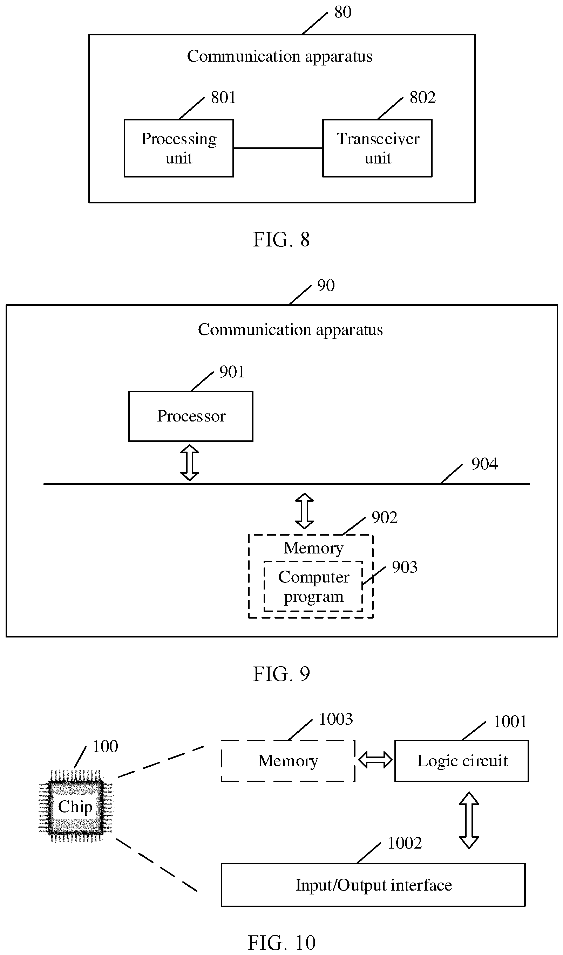

FIG. 8 is a schematic diagram of a structure of a communication apparatus 80 according to an embodiment of the application. The communication apparatus 80 shown in FIG. 8 may include a processing unit 801 and a transceiver unit 802. The transceiver unit 802 may include a sending unit and/or a receiving unit. The sending unit is configured to implement a sending function, the receiving unit is configured to implement a receiving function, and the transceiver unit 802 may implement the sending function and/or the receiving function. The transceiver unit may alternatively be described as a communication unit.

In a design, the communication apparatus 80 may be a transmit end, or may be an apparatus in the transmit end, or may be an apparatus that can be used in a matching manner with the transmit end.

For example, the processing unit 801 is configured to determine a reference signal and a data signal. The reference signal is for transmitting first data. The data signal is for transmitting second data. A resource element carrying the reference signal and a resource element carrying the data signal belong to a same frequency domain resource assignment.

The transceiver unit 802 is configured to send the reference signal and the data signal. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

In an implementation, the modulation and coding parameter of the reference signal is determined based on the modulation and coding parameter of the data signal, or the modulation and coding parameter of the data signal is determined based on the modulation and coding parameter of the reference signal.

In an implementation, the modulation and coding parameter of the reference signal is determined based on one or more of the following parameters: the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals included in a reference signal block to which the reference signal belongs, or a data volume of the first data.

In an implementation, the transceiver unit 802 is further configured to send indication information. The indication information indicates the modulation and coding parameter of the reference signal.

In an implementation, a resource block carrying the reference signal further carries first information. The reference signal is transmitted based on a first transport block, and the first information is transmitted based on a second transport block.

In an implementation, the first transport block and the second transport block are a same transport block.

In an implementation, the reference signal includes a first reference signal and a second reference signal. A resource element carrying the first reference signal is adjacent to a resource element carrying the second reference signal in at least one of the following domains: time domain or frequency domain. The first reference signal is a reference signal having a largest modulation and coding parameter in the reference signal for transmitting the first data. The second reference signal is a reference signal having a smallest modulation and coding parameter in the reference signal for transmitting the first data.

In an implementation, the first data is specifically transmitted based on a plurality of reference signal blocks. Each reference signal block includes a plurality of reference signals, and each reference signal block includes at least two reference signals that have different modulation and coding parameters.

In an implementation, the reference signal is a phase tracking reference signal.

In an implementation, the first data is specifically transmitted based on a first reference signal block and a second reference signal block. For each reference signal in the first reference signal block, a modulation and coding parameter of the reference signal is the same as a modulation and coding parameter of a corresponding reference signal in the second reference signal block.

In an implementation, the first data is specifically transmitted based on a third reference signal block and a fourth reference signal block. A modulation and coding parameter of each reference signal in the third reference signal block is a first modulation and coding parameter. A modulation and coding parameter of each reference signal in the fourth reference signal block is a second modulation and coding parameter.

In an implementation, orthogonal cover code OCC information of the reference signal is the same as OCC information of a demodulated reference signal.

When the communication apparatus 80 is the transmit end, the communication apparatus 80 is configured to implement the functions of the transmit end in the embodiments corresponding to FIG. 2 and FIG. 3.

In a design, the communication apparatus 80 may be a receive end, or may be an apparatus in the receive end, or may be an apparatus that can be used in a matching manner with the receive end.

For example, the transceiver unit 802 is configured to obtain a first signal and a second signal. The first signal includes a signal obtained after a reference signal is transmitted. The second signal includes a signal obtained after a data signal is transmitted. A resource element carrying the reference signal and a resource element carrying the data signal belong to a same frequency domain resource assignment.

The processing unit 801 is configured to demodulate the first signal to obtain first data.

The processing unit 801 is further configured to demodulate the second signal to obtain second data. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

In an implementation, the modulation and coding parameter of the reference signal is determined based on the modulation and coding parameter of the data signal, or the modulation and coding parameter of the data signal is determined based on the modulation and coding parameter of the reference signal.

In an implementation, the modulation and coding parameter of the reference signal is determined based on one or more of the following parameters: the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals included in a reference signal block to which the reference signal belongs, or a data volume of the first data.

In an implementation, the transceiver unit 802 is further configured to obtain indication information. The indication information indicates the modulation and coding parameter of the reference signal.

In an implementation, a resource block carrying the reference signal further carries first information. The reference signal is transmitted based on a first transport block, and the first information is transmitted based on a second transport block.

In an implementation, the first transport block and the second transport block are a same transport block.

In an implementation, the reference signal includes a first reference signal and a second reference signal. A resource element carrying the first reference signal is adjacent to a resource element carrying the second reference signal in at least one of the following domains: time domain or frequency domain. The first reference signal is a reference signal having a largest modulation and coding parameter in the reference signal for transmitting the first data. The second reference signal is a reference signal having a smallest modulation and coding parameter in the reference signal for transmitting the first data.

In an implementation, the first signal specifically includes a signal obtained after a reference signal in a plurality of reference signal blocks is transmitted. Each reference signal block includes a plurality of reference signals, and each reference signal block includes at least two reference signals that have different modulation and coding parameters.

In an implementation, the reference signal is a phase tracking reference signal.

In an implementation, the first signal specifically includes a signal obtained after a reference signal in a first reference signal block is transmitted and a signal obtained after a reference signal in a second reference signal block is transmitted. For each reference signal in the first reference signal block, a modulation and coding parameter of the reference signal is the same as a modulation and coding parameter of a corresponding reference signal in the second reference signal block.

In an implementation, the first signal specifically includes a signal obtained after a reference signal in a third reference signal block is transmitted and a signal obtained after a reference signal in a fourth reference signal block is transmitted. A modulation and coding parameter of each reference signal in the third reference signal block is a first modulation and coding parameter. A modulation and coding parameter of each reference signal in the fourth reference signal block is a second modulation and coding parameter.

In an implementation, orthogonal cover code OCC information of the reference signal is the same as OCC information of a demodulated reference signal.

When the communication apparatus 80 is the receive end, the communication apparatus 80 is configured to implement the functions of the receive end in the embodiments corresponding to FIG. 2 and FIG. 3.

FIG. 9 is a schematic diagram of a structure of another communication apparatus 90 according to an embodiment of the application. The communication apparatus 90 may be a transmit end or a receive end, or may be a chip, a chip system, a processor, or the like that supports the transmit end or the receive end to implement the foregoing method. The apparatus may be configured to implement the methods described at the transmit end or the receive end in the foregoing method embodiments. For details, refer to the descriptions in the foregoing method embodiments.

The communication apparatus 90 may include one or more processors 901. The processor 901 may be a general-purpose processor, a dedicated processor, or the like. For example, the processor 901 may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a computer program, and process data of the computer program.

Optionally, the communication apparatus 90 may further include an input/output unit. The input/output unit may include but is not limited to the following implementation forms: an input/output interface, a transceiver unit, a transceiver, a transceiver circuit, or the like, and is configured to implement a transceiver function. The input/output unit may include an input unit and an output unit. The input unit may be a receiver, a receiver circuit, or the like, and is configured to implement a receiving function. The output unit may be a transmitter, an output circuit, a transmitter circuit, or the like, and is configured to implement an output function and/or a sending function. The input unit and the output unit that are configured to implement the receiving function and the sending function may be separated, or may be integrated together. The input unit and the output unit may be configured to read and write code/data, or may be configured to transmit or transfer a signal.

Optionally, the communication apparatus 90 may include one or more memories 902. The memory 902 may store a computer program 903. The computer program may be run on the communication apparatus 90, so that the communication apparatus 90 performs the methods described in the foregoing method embodiments. Optionally, the memory 902 may further store data. A dashed box 902 in FIG. 9 indicates that the memory 902 may be disposed separately, or may be integrated with the processor 901. Optionally, the computer program 903 may be further fixed in the processor 901.

A specific connection medium between the processor 901, the input/output unit, and the memory 902 is not limited in this embodiment of the application. In this embodiment of the application, in this figure, the processor 901, the input/output unit, and the memory 902 are connected through a bus 904. The bus 904 is indicated by a bold line in this figure. A connection manner between other components is merely an example for description, and constitutes no limitation. The bus 904 may be classified into an address bus, a data bus, a control bus, and the like. For ease of indication, the bus is indicated by only one bold line in FIG. 9. However, it does not indicate that there is only one bus or only one type of bus.

In a design, the communication apparatus 90 may be the transmit end.

For example, the processor 901 is configured to determine a reference signal and a data signal. The reference signal is for transmitting first data. The data signal is for transmitting second data. A resource element carrying the reference signal and a resource element carrying the data signal belong to a same frequency domain resource assignment.

The processor 901 is further configured to send the reference signal and the data signal. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

In an implementation, the modulation and coding parameter of the reference signal is determined based on the modulation and coding parameter of the data signal, or the modulation and coding parameter of the data signal is determined based on the modulation and coding parameter of the reference signal.

In an implementation, the modulation and coding parameter of the reference signal is determined based on one or more of the following parameters: the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals included in a reference signal block to which the reference signal belongs, or a data volume of the first data.

In an implementation, the processor 901 is further configured to send indication information. The indication information indicates the modulation and coding parameter of the reference signal.

In an implementation, a resource block carrying the reference signal further carries first information. The reference signal is transmitted based on a first transport block, and the first information is transmitted based on a second transport block.

In an implementation, the first transport block and the second transport block are a same transport block.

In an implementation, the reference signal includes a first reference signal and a second reference signal. A resource element carrying the first reference signal is adjacent to a resource element carrying the second reference signal in at least one of the following domains: time domain or frequency domain. The first reference signal is a reference signal having a largest modulation and coding parameter in the reference signal for transmitting the first data. The second reference signal is a reference signal having a smallest modulation and coding parameter in the reference signal for transmitting the first data.

In an implementation, the first data is specifically transmitted based on a plurality of reference signal blocks. Each reference signal block includes a plurality of reference signals, and each reference signal block includes at least two reference signals that have different modulation and coding parameters.

In an implementation, the reference signal is a phase tracking reference signal.

In an implementation, the first data is specifically transmitted based on a first reference signal block and a second reference signal block. For each reference signal in the first reference signal block, a modulation and coding parameter of the reference signal is the same as a modulation and coding parameter of a corresponding reference signal in the second reference signal block.

In an implementation, the first data is specifically transmitted based on a third reference signal block and a fourth reference signal block. A modulation and coding parameter of each reference signal in the third reference signal block is a first modulation and coding parameter. A modulation and coding parameter of each reference signal in the fourth reference signal block is a second modulation and coding parameter.

In an implementation, orthogonal cover code OCC information of the reference signal is the same as OCC information of a demodulated reference signal.

For an operation performed by the processor 901, refer to the descriptions about the transmit end in the embodiments corresponding to FIG. 2 and FIG. 3.

In a design, the communication apparatus 90 may be the receive end.

For example, the processor 901 is configured to obtain a first signal and a second signal. The first signal includes a signal obtained after a reference signal is transmitted. The second signal includes a signal obtained after a data signal is transmitted. A resource element carrying the reference signal and a resource element carrying the data signal belong to a same frequency domain resource assignment.

The processor 901 is further configured to demodulate the first signal to obtain first data.

The processor 901 is further configured to demodulate the second signal to obtain second data. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

In an implementation, the modulation and coding parameter of the reference signal is determined based on the modulation and coding parameter of the data signal, or the modulation and coding parameter of the data signal is determined based on the modulation and coding parameter of the reference signal.

In an implementation, the modulation and coding parameter of the reference signal is determined based on one or more of the following parameters: the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals included in a reference signal block to which the reference signal belongs, or a data volume of the first data.

In an implementation, the processor 901 is further configured to obtain indication information. The indication information indicates the modulation and coding parameter of the reference signal.

In an implementation, a resource block carrying the reference signal further carries first information. The reference signal is transmitted based on a first transport block, and the first information is transmitted based on a second transport block.

In an implementation, the first transport block and the second transport block are a same transport block.

In an implementation, the reference signal includes a first reference signal and a second reference signal. A resource element carrying the first reference signal is adjacent to a resource element carrying the second reference signal in at least one of the following domains: time domain or frequency domain. The first reference signal is a reference signal having a largest modulation and coding parameter in the reference signal for transmitting the first data. The second reference signal is a reference signal having a smallest modulation and coding parameter in the reference signal for transmitting the first data.

In an implementation, the first signal specifically includes a signal obtained after a reference signal in a plurality of reference signal blocks is transmitted. Each reference signal block includes a plurality of reference signals, and each reference signal block includes at least two reference signals that have different modulation and coding parameters.

In an implementation, the reference signal is a phase tracking reference signal.

In an implementation, the first signal specifically includes a signal obtained after a reference signal in a first reference signal block is transmitted and a signal obtained after a reference signal in a second reference signal block is transmitted. For each reference signal in the first reference signal block, a modulation and coding parameter of the reference signal is the same as a modulation and coding parameter of a corresponding reference signal in the second reference signal block.

In an implementation, the first signal specifically includes a signal obtained after a reference signal in a third reference signal block is transmitted and a signal obtained after a reference signal in a fourth reference signal block is transmitted. A modulation and coding parameter of each reference signal in the third reference signal block is a first modulation and coding parameter. A modulation and coding parameter of each reference signal in the fourth reference signal block is a second modulation and coding parameter.

In an implementation, orthogonal cover code OCC information of the reference signal is the same as OCC information of a demodulated reference signal.

For an operation performed by the processor 901, refer to the descriptions about the receive end in the embodiments corresponding to FIG. 2 and FIG. 3.

In an implementation, the communication apparatus 90 may include a circuit, and the circuit may implement the sending, receiving, or communication function in the foregoing method embodiments. The processor described in the application may be implemented in the following manner: an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor may alternatively be manufactured by using the following IC process technology, for example, a complementary metal oxide semiconductor (complementary metal oxide semiconductor, CMOS), an n-type metal oxide semiconductor (n-type Metal oxide semiconductor, NMOS), a positive channel metal oxide semiconductor (positive channel metal oxide semiconductor, PMOS), a bipolar junction transistor (bipolar junction transistor, BJT), a bipolar CMOS (BiCMOS), silicon germanium (SiGe), gallium arsenide (GaAs), and the like.

The communication apparatus in the foregoing embodiment may be a transmit end or a receive end. However, a scope of the communication apparatus described in the application is not limited thereto, and a structure of the communication apparatus may not be limited by FIG. 9. The communication apparatus may be an independent device or may be a part of a large device. For example, the communication apparatus may be:

(1) an independent integrated circuit IC, a chip, or a chip system or subsystem;
(2) a set including one or more ICs, where optionally, the set of ICs may also include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others or the like.

When the communication apparatus may be a chip or a chip system, refer to a schematic diagram of a structure of a chip shown in FIG. 10. The chip 100 shown in FIG. 10 includes a logic circuit 1001 and an input/output interface 1002. There may be one or more logic circuits 1001, and there may be a plurality of input/output interfaces 1002.

For a case in which the chip 100 is configured to implement a function of the transmit end in embodiments of the application:

The logic circuit 1001 is configured to determine a reference signal and a data signal. The reference signal is for transmitting first data. The data signal is for transmitting second data. A resource element carrying the reference signal and a resource element carrying the data signal belong to a same frequency domain resource assignment.

The input/output interface 1002 is configured to send the reference signal and the data signal. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

In an implementation, the modulation and coding parameter of the reference signal is determined based on the modulation and coding parameter of the data signal, or the modulation and coding parameter of the data signal is determined based on the modulation and coding parameter of the reference signal.

In an implementation, the modulation and coding parameter of the reference signal is determined based on one or more of the following parameters: the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals included in a reference signal block to which the reference signal belongs, or a data volume of the first data.

In an implementation, the input/output interface 1002 is further configured to send indication information. The indication information indicates the modulation and coding parameter of the reference signal.

In an implementation, a resource block carrying the reference signal further carries first information. The reference signal is transmitted based on a first transport block, and the first information is transmitted based on a second transport block.

In an implementation, the first transport block and the second transport block are a same transport block.

In an implementation, the reference signal includes a first reference signal and a second reference signal. A resource element carrying the first reference signal is adjacent to a resource element carrying the second reference signal in at least one of the following domains: time domain or frequency domain. The first reference signal is a reference signal having a largest modulation and coding parameter in the reference signal for transmitting the first data. The second reference signal is a reference signal having a smallest modulation and coding parameter in the reference signal for transmitting the first data.

In an implementation, the first data is specifically transmitted based on a plurality of reference signal blocks. Each reference signal block includes a plurality of reference signals, and each reference signal block includes at least two reference signals that have different modulation and coding parameters.

In an implementation, the reference signal is a phase tracking reference signal.

In an implementation, the first data is specifically transmitted based on a first reference signal block and a second reference signal block. For each reference signal in the first reference signal block, a modulation and coding parameter of the reference signal is the same as a modulation and coding parameter of a corresponding reference signal in the second reference signal block.

In an implementation, the first data is specifically transmitted based on a third reference signal block and a fourth reference signal block. A modulation and coding parameter of each reference signal in the third reference signal block is a first modulation and coding parameter. A modulation and coding parameter of each reference signal in the fourth reference signal block is a second modulation and coding parameter.

In an implementation, orthogonal cover code OCC information of the reference signal is the same as OCC information of a demodulated reference signal.

Specifically, in this case, for operations performed by the logic circuit 1001 and the input/output interface 1002, refer to the descriptions about the transmit end in the embodiments corresponding to FIG. 2 and FIG. 3.

For a case in which the chip 100 is configured to implement a function of the receive end in embodiments of the application:

The input/output interface 1002 is configured to obtain a first signal and a second signal. The first signal includes a signal obtained after a reference signal is transmitted. The second signal includes a signal obtained after a data signal is transmitted. A resource element carrying the reference signal and a resource element carrying the data signal belong to a same frequency domain resource assignment.

The logic circuit 1001 is configured to demodulate the first signal to obtain first data.

The logic circuit 1001 is further configured to demodulate the second signal to obtain second data. A modulation and coding parameter of the reference signal is smaller than a modulation and coding parameter of the data signal. The modulation and coding parameter includes one or more of the following: a modulation and coding scheme MCS index, a modulation order, a code rate, or spectral efficiency.

In an implementation, the modulation and coding parameter of the reference signal is determined based on the modulation and coding parameter of the data signal, or the modulation and coding parameter of the data signal is determined based on the modulation and coding parameter of the reference signal.

In an implementation, the modulation and coding parameter of the reference signal is determined based on one or more of the following parameters: the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals included in a reference signal block to which the reference signal belongs, or a data volume of the first data.

In an implementation, the input/output interface 1002 is further configured to obtain indication information. The indication information indicates the modulation and coding parameter of the reference signal.

In an implementation, a resource block carrying the reference signal further carries first information. The reference signal is transmitted based on a first transport block, and the first information is transmitted based on a second transport block.

In an implementation, the first transport block and the second transport block are a same transport block.

In an implementation, the reference signal includes a first reference signal and a second reference signal. A resource element carrying the first reference signal is adjacent to a resource element carrying the second reference signal in at least one of the following domains: time domain or frequency domain. The first reference signal is a reference signal having a largest modulation and coding parameter in the reference signal for transmitting the first data. The second reference signal is a reference signal having a smallest modulation and coding parameter in the reference signal for transmitting the first data.

In an implementation, the first signal specifically includes a signal obtained after a reference signal in a plurality of reference signal blocks is transmitted. Each reference signal block includes a plurality of reference signals, and each reference signal block includes at least two reference signals that have different modulation and coding parameters.

In an implementation, the reference signal is a phase tracking reference signal.

In an implementation, the first signal specifically includes a signal obtained after a reference signal in a first reference signal block is transmitted and a signal obtained after a reference signal in a second reference signal block is transmitted. For each reference signal in the first reference signal block, a modulation and coding parameter of the reference signal is the same as a modulation and coding parameter of a corresponding reference signal in the second reference signal block.

In an implementation, the first signal specifically includes a signal obtained after a reference signal in a third reference signal block is transmitted and a signal obtained after a reference signal in a fourth reference signal block is transmitted. A modulation and coding parameter of each reference signal in the third reference signal block is a first modulation and coding parameter. A modulation and coding parameter of each reference signal in the fourth reference signal block is a second modulation and coding parameter.

In an implementation, orthogonal cover code OCC information of the reference signal is the same as OCC information of a demodulated reference signal.

Specifically, in this case, for operations performed by the logic circuit 1001 and the input/output interface 1002, refer to the descriptions about the receive end in the embodiments corresponding to FIG. 2 and FIG. 3.

Optionally, the chip further includes a memory 1003, and the memory 1003 is configured to store a necessary computer program and necessary data. The memory 1003 may be disposed separately, or may be integrated with the logic circuit 1001, as shown in a dashed box 1003 in FIG. 10.

A person skilled in the art may further understand that various illustrative logical blocks (illustrative logical blocks) and steps (steps) listed in embodiments of the application may be implemented through electronic hardware, computer software, or a combination thereof. Whether the functions are implemented by hardware or software depends on a particular application and a design requirement of the entire system. A person of ordinary skill in the art may use various methods to implement the described functions for each particular application, but it should not be considered that the implementation goes beyond the scope of embodiments of the application.

The application further provides a computer-readable storage medium. The computer-readable storage medium stores a computer program. The computer program includes program instructions. When the program instructions are executed by a computer, a function in any one of the foregoing method embodiments is implemented.

The computer-readable storage medium includes but is not limited to a flash memory, a hard disk, and a solid-state drive.

The application further provides a computer program product. The computer program product includes a computer program or instructions. When the computer program or the instructions is/are executed by a computer, a function in any one of the foregoing method embodiments is implemented.

It may be understood that, in some scenarios, some optional features in embodiments of the application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the apparatus provided in embodiments of the application may also correspondingly implement these features or functions. Details are not described herein.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs. When the computer program is loaded and executed on the computer, the procedure or functions according to embodiments of the application are all or partially generated. The computer may be a general-purpose computer, a dedicated computer, a computer network, or other programmable apparatuses. The computer program may be stored in a computer-readable storage medium or may be transmitted from a computer-readable storage medium to another computer-readable storage medium. For example, the computer program may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that an "embodiment" mentioned throughout this specification means that particular features, structures, or characteristics related to this embodiment are included in at least one embodiment of the application. Therefore, embodiments in the entire specification do not necessarily refer to a same embodiment. In addition, these particular features, structures, or characteristics may be combined in one or more embodiments by using any appropriate manner. It may be understood that sequence numbers of the foregoing processes do not mean an execution sequence in various embodiments of the application. The execution sequence of the processes should be determined based on functions and internal logic of the processes, and should not be construed as any limitation on the implementation processes of embodiments of the application.

It may be understood that, in the application, "when", "if", and "in case of" all mean that an apparatus performs corresponding processing in an objective case, are not intended to limit time, does not require the apparatus to necessarily have a determining action during implementation, and do not mean that there is another limitation.

A person of ordinary skill in the art may understand that various numbers such as first and second in the application are merely used for differentiation for ease of description, and are not used to limit the scope of embodiments of the application or represent a sequence.

In the application, "at least one" may alternatively be described as "one or more", and "a plurality of" may be two, three, four, or more. This is not limited in the application. In embodiments of the application, "first", "second", "third", "A", "B", "C", "D", and the like are used for distinguishing between technical features described by them. There is no chronological order or no size order between the technical features described by "first", "second", "third", "A", "B", "C", and "D".

In addition, the terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural.

The correspondences shown in the tables in the application may be configured, or may be predefined. Values of the information in the tables are merely examples, and other values may be configured. This is not limited in the application. When a correspondence between the information and the parameters is configured, not all the correspondences shown in the tables need to be configured. For example, in the tables in the application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in the application may be understood as "define", "predefine", "store", "pre-store", "pre-negotiate", "pre-configure", "solidify", or "pre-burn".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

For same or similar parts in embodiments of the application, refer to each other. In embodiments of the application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing descriptions are implementations of the application, but are not intended to limit the protection scope of the application.

The foregoing descriptions are merely specific implementations of the application, but are not intended to limit the protection scope of the application. Any variation or replacement readily figured out by a person skilled in the art within the technical scope disclosed in the application shall fall within the protection scope of the application. Therefore, the protection scope of the application shall be subject to the protection scope of the claims.

## Claims

1. A data transmission method, wherein the method comprises:

   determining, by a transmit end, a reference signal and a data signal, wherein the reference signal is for transmitting first data, the data signal is for transmitting second data, and a resource element carrying the reference signal and a resource element carrying the data signal belong to a same frequency domain resource assignment; and
   sending, by the transmit end, the reference signal and the data signal, wherein a modulation and coding parameter of the reference signal is smaller than a modulation and coding parameter of the data signal, and the modulation and coding parameter comprises one or more of the following: a modulation and coding scheme MCS index, a modulation order, a code rate, or spectral efficiency.

2. The method according to claim 1, wherein the modulation and coding parameter of the reference signal is determined based on the modulation and coding parameter of the data signal, or the modulation and coding parameter of the data signal is determined based on the modulation and coding parameter of the reference signal.

3. The method according to claim 1, wherein the modulation and coding parameter of the reference signal is determined based on one or more of the following parameters:
   the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals comprised in a reference signal block to which the reference signal belongs, or a data volume of the first data.

4. The method according to any one of claims 1 to 3, wherein the method further comprises:
   sending, by the transmit end, indication information, wherein the indication information indicates the modulation and coding parameter of the reference signal.

5. The method according to any one of claims 1 to 4, wherein a resource block carrying the reference signal further carries first information, the reference signal is transmitted based on a first transport block, and the first information is transmitted based on a second transport block.

6. The method according to claim 5, wherein the first transport block and the second transport block are a same transport block.

7. The method according to any one of claims 1 to 6, wherein the reference signal comprises a first reference signal and a second reference signal, and a resource element carrying the first reference signal is adjacent to a resource element carrying the second reference signal in at least one of the following domains: time domain or frequency domain; and
   the first reference signal is a reference signal having a largest modulation and coding parameter in the reference signal for transmitting the first data, and the second reference signal is a reference signal having a smallest modulation and coding parameter in the reference signal for transmitting the first data.

8. The method according to any one of claims 1 to 7, wherein the first data is specifically transmitted based on a plurality of reference signal blocks, each reference signal block comprises a plurality of reference signals, and each reference signal block comprises at least two reference signals that have different modulation and coding parameters.

9. The method according to claim 8, wherein the first data is specifically transmitted based on a first reference signal block and a second reference signal block, and for each reference signal in the first reference signal block, a modulation and coding parameter of the reference signal is the same as a modulation and coding parameter of a corresponding reference signal in the second reference signal block.

10. The method according to claim 8, wherein the first data is specifically transmitted based on a third reference signal block and a fourth reference signal block, a modulation and coding parameter of each reference signal in the third reference signal block is a first modulation and coding parameter, and a modulation and coding parameter of each reference signal in the fourth reference signal block is a second modulation and coding parameter.

11. The method according to any one of claims 1 to 10, wherein the reference signal is a phase tracking reference signal.

12. The method according to any one of claims 1 to 11, wherein orthogonal cover code OCC information of the reference signal is the same as OCC information of a demodulated reference signal.

13. A data transmission method, comprising:

obtaining, by a receive end, a first signal and a second signal, wherein the first signal comprises a signal obtained after a reference signal is transmitted, the second signal comprises a signal obtained after a data signal is transmitted, and a resource element carrying the reference signal and a resource element carrying the data signal belong to a same frequency domain resource assignment;
demodulating, by the receive end, the first signal to obtain first data; and
demodulating, by the receive end, the second signal to obtain second data, wherein
a modulation and coding parameter of the reference signal is smaller than a modulation and coding parameter of the data signal, and the modulation and coding parameter comprises one or more of the following: a modulation and coding scheme MCS index, a modulation order, a code rate, or spectral efficiency.

14. The method according to claim 13, wherein the modulation and coding parameter of the reference signal is determined based on the modulation and coding parameter of the data signal, or the modulation and coding parameter of the data signal is determined based on the modulation and coding parameter of the reference signal.

15. The method according to claim 13, wherein the modulation and coding parameter of the reference signal is determined based on one or more of the following parameters:
the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals comprised in a reference signal block to which the reference signal belongs, or a data volume of the first data.

16. The method according to any one of claims 13 to 15, wherein the method further comprises:
obtaining, by the receive end, indication information, wherein the indication information indicates the modulation and coding parameter of the reference signal.

17. The method according to any one of claims 13 to 16, wherein a resource block carrying the reference signal further carries first information, the reference signal is transmitted based on a first transport block, and the first information is transmitted based on a second transport block.

18. The method according to claim 17, wherein the first transport block and the second transport block are a same transport block.

19. The method according to any one of claims 13 to 18, wherein the reference signal comprises a first reference signal and a second reference signal, and a resource element carrying the first reference signal is adjacent to a resource element carrying the second reference signal in at least one of the following domains: time domain or frequency domain; and
the first reference signal is a reference signal having a largest modulation and coding parameter in the reference signal for transmitting the first data, and the second reference signal is a reference signal having a smallest modulation and coding parameter in the reference signal for transmitting the first data.

20. The method according to any one of claims 13 to 19, wherein the first signal specifically comprises a signal obtained after a reference signal in a plurality of reference signal blocks is transmitted, each reference signal block comprises a plurality of reference signals, and each reference signal block comprises at least two reference signals that have different modulation and coding parameters.

21. The method according to claim 20, wherein the first signal specifically comprises a signal obtained after a reference signal in a first reference signal block is transmitted and a signal obtained after a reference signal in a second reference signal block is transmitted, and for each reference signal in the first reference signal block, a modulation and coding parameter of the reference signal is the same as a modulation and coding parameter of a corresponding reference signal in the second reference signal block.

22. The method according to claim 20, wherein the first signal specifically comprises a signal obtained after a reference signal in a third reference signal block is transmitted and a signal obtained after a reference signal in a fourth reference signal block is transmitted, a modulation and coding parameter of each reference signal in the third reference signal block is a first modulation and coding parameter, and a modulation and coding parameter of each reference signal in the fourth reference signal block is a second modulation and coding parameter.

23. The method according to any one of claims 13 to 22, wherein the reference signal is a phase tracking reference signal.

24. The method according to any one of claims 13 to 23, wherein orthogonal cover code OCC information of the reference signal is the same as OCC information of a demodulated reference signal.

25. A communication apparatus, comprising a processing unit and a transceiver unit, wherein

the processing unit is configured to determine a reference signal and a data signal, wherein the reference signal is for transmitting first data, the data signal is for transmitting second data, and a resource element carrying the reference signal and a resource element carrying the data signal belong to a same frequency domain resource assignment; and
the transceiver unit is configured to send the reference signal and the data signal, wherein a modulation and coding parameter of the reference signal is smaller than a modulation and coding parameter of the data signal, and the modulation and coding parameter comprises one or more of the following: a modulation and coding scheme MCS index, a modulation order, a code rate, or spectral efficiency.

26. The apparatus according to claim 25, wherein the modulation and coding parameter of the reference signal is determined based on the modulation and coding parameter of the data signal, or the modulation and coding parameter of the data signal is determined based on the modulation and coding parameter of the reference signal.

27. The apparatus according to claim 25, wherein the modulation and coding parameter of the reference signal is determined based on one or more of the following parameters:
the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals comprised in a reference signal block to which the reference signal belongs, or a data volume of the first data.

28. The apparatus according to any one of claims 25 to 27, wherein
the transceiver unit is further configured to send indication information, wherein the indication information indicates the modulation and coding parameter of the reference signal.

29. The apparatus according to any one of claims 25 to 28, wherein a resource block carrying the reference signal further carries first information, the reference signal is transmitted based on a first transport block, and the first information is transmitted based on a second transport block.

30. The apparatus according to claim 29, wherein the first transport block and the second transport block are a same transport block.

31. The apparatus according to any one of claims 25 to 30, wherein the reference signal comprises a first reference signal and a second reference signal, and a resource element carrying the first reference signal is adjacent to a resource element carrying the second reference signal in at least one of the following domains: time domain or frequency domain; and

the first reference signal is a reference signal having a largest modulation and coding parameter in the reference signal for transmitting the first data, and the second reference signal is a reference signal having a smallest modulation and coding parameter in the reference signal for transmitting the first data.

32. The apparatus according to any one of claims 25 to 31, wherein the first data is specifically transmitted based on a plurality of reference signal blocks, each reference signal block comprises a plurality of reference signals, and each reference signal block comprises at least two reference signals that have different modulation and coding parameters.

33. The apparatus according to claim 32, wherein the first data is specifically transmitted based on a first reference signal block and a second reference signal block, and for each reference signal in the first reference signal block, a modulation and coding parameter of the reference signal is the same as a modulation and coding parameter of a corresponding reference signal in the second reference signal block.

34. The apparatus according to claim 32, wherein the first data is specifically transmitted based on a third reference signal block and a fourth reference signal block, a modulation and coding parameter of each reference signal in the third reference signal block is a first modulation and coding parameter, and a modulation and coding parameter of each reference signal in the fourth reference signal block is a second modulation and coding parameter.

35. The apparatus according to any one of claims 25 to 34, wherein the reference signal is a phase tracking reference signal.

36. The apparatus according to any one of claims 25 to 35, wherein orthogonal cover code OCC information of the reference signal is the same as OCC information of a demodulated reference signal.

37. A communication apparatus, comprising a transceiver unit and a processing unit, wherein

the transceiver unit is configured to obtain a first signal and a second signal, wherein the first signal comprises a signal obtained after a reference signal is transmitted, the second signal comprises a signal obtained after a data signal is transmitted, and a resource element carrying the reference signal and a resource element carrying the data signal belong to a same frequency domain resource assignment;

the processing unit is configured to demodulate the first signal to obtain first data; and

the processing unit is configured to demodulate the second signal to obtain second data, wherein a modulation and coding parameter of the reference signal is smaller than a modulation and coding parameter of the data signal, and the modulation and coding parameter comprises one or more of the following: a modulation and coding scheme MCS index, a modulation order, a code rate, or spectral efficiency.

38. The apparatus according to claim 37, wherein the modulation and coding parameter of the reference signal is determined based on the modulation and coding parameter of the data signal, or the modulation and coding parameter of the data signal is determined based on the modulation and coding parameter of the reference signal.

39. The apparatus according to claim 37, wherein the modulation and coding parameter of the reference signal is determined based on one or more of the following parameters:

the modulation and coding parameter of the data signal, a quantity of resource elements occupied by the second data, power of the second data, frequency domain density of the reference signal, time domain density of the reference signal, power of the reference signal, a quantity of reference signals, a quantity of reference signals comprised in a reference signal block to which the reference signal belongs, or a data volume of the first data.

40. The apparatus according to any one of claims 37 to 39, wherein

the transceiver unit is further configured to obtain indication information, wherein the indication information indicates the modulation and coding parameter of the reference signal.

41. The apparatus according to any one of claims 37 to 40, wherein a resource block carrying the reference signal further carries first information, the reference signal is transmitted based on a first transport block, and the first information is transmitted based on a second transport block.

42. The apparatus according to claim 41, wherein the first transport block and the second transport block are a same transport block.

43. The apparatus according to any one of claims 37 to 42, wherein the reference signal comprises a first reference signal and a second reference signal, and a resource element carrying the first reference signal is adjacent to a resource element carrying the second reference signal in at least one of the following domains: time domain or frequency domain; and
the first reference signal is a reference signal having a largest modulation and coding parameter in the reference signal for transmitting the first data, and the second reference signal is a reference signal having a smallest modulation and coding parameter in the reference signal for transmitting the first data.

44. The apparatus according to any one of claims 37 to 43, wherein the first signal specifically comprises a signal obtained after a reference signal in a plurality of reference signal blocks is transmitted, each reference signal block comprises a plurality of reference signals, and each reference signal block comprises at least two reference signals that have different modulation and coding parameters.

45. The apparatus according to claim 44, wherein the first signal specifically comprises a signal obtained after a reference signal in a first reference signal block is transmitted and a signal obtained after a reference signal in a second reference signal block is transmitted, and for each reference signal in the first reference signal block, a modulation and coding parameter of the reference signal is the same as a modulation and coding parameter of a corresponding reference signal in the second reference signal block.

46. The apparatus according to claim 44, wherein the first signal specifically comprises a signal obtained after a reference signal in a third reference signal block is transmitted and a signal obtained after a reference signal in a fourth reference signal block is transmitted, a modulation and coding parameter of each reference signal in the third reference signal block is a first modulation and coding parameter, and a modulation and coding parameter of each reference signal in the fourth reference signal block is a second modulation and coding parameter.

47. The apparatus according to any one of claims 37 to 46, wherein the reference signal is a phase tracking reference signal.

48. The apparatus according to any one of claims 37 to 47, wherein orthogonal cover code OCC information of the reference signal is the same as OCC information of a demodulated reference signal.

49. A communication apparatus, comprising a processor, wherein the processor is coupled to a memory, wherein

the memory is configured to store program code; and
the processor is configured to invoke the program code in the memory to perform the method according to any one of claims 1 to 12 or claims 13 to 24.

50. A communication apparatus, comprising a logic circuit and an input/output interface, wherein

the logic circuit is configured to determine a reference signal and a data signal;
the input/output interface is configured to send the reference signal and the data signal; and
the logic circuit is further configured to perform the method according to any one of claims 1 to 12; or
the input/output interface is configured to obtain a first signal and a second signal;
the logic circuit is configured to demodulate the first signal to obtain first data; and
the logic circuit is further configured to: demodulate the second signal to obtain second data; and perform the method according to any one of claims 13 to 24.

51. A computer-readable storage medium, wherein the computer-readable storage medium stores a computer program, the computer program comprises program instructions, and when the program instructions are executed by a communication apparatus, the method according to any one of claims 1 to 12 or claims 13 to 24 is performed.

52. A computer program product, wherein the computer program product comprises a computer program or instructions, and when the computer program or the instructions are run on a computer, the computer is enabled to perform the method according to any one of claims 1 to 12 or claims 13 to 24.

**53.** A communication system, wherein the communication system comprises a transmit end and a receive end, the transmit end is configured to perform the method according to any one of claims 1 to 12, and the receive end is configured to perform the method according to any one of claims 13 to 24.

101

Transmit
end

Reference signal
and data signal →

102

Receive
end

FIG. 1a

Data bit of
first data → Modulation →

Mapping → IFFT → RF → Transmit →

Data bit of
second data → Modulation →

FIG. 1b

Data bit of
first data

Estimation result
of phase noise ← Demodulation ← Demapping ← FFT ← RF ← Receive

Data bit of
second data ← Demodulation ←

FIG. 1c

```
┌──────────┐     ┌──────────┐     ┌─────┐
│ Data bit │     │          │     │     │
│ of first │ ──> │Modulation│ ──> │     │
│   data   │     │          │     │     │
└──────────┘     └──────────┘     │     │     ┌──────────┐     ┌──────────┐     ┌──────────┐     ┌──────────┐
                                  │ DFT │ ──> │ Filtering│ ──> │ Mapping  │ ──> │   IFFT   │ ──> │    RF    │ ──> Transmit
┌──────────┐     ┌──────────┐     │     │     └──────────┘     └──────────┘     └──────────┘     └──────────┘
│ Data bit │     │          │     │     │
│of second │ ──> │Modulation│ ──> │     │
│   data   │     │          │     │     │
└──────────┘     └──────────┘     └─────┘
```

FIG. 1d

FIG. 1e

101

Network
device

Reference signal
and data signal →

102

Terminal
device

FIG. 1f

Transmit end

Receive end

S201: Determine a reference signal and a
data signal, where the reference signal is
for transmitting first data, and the data
signal is for transmitting second data

S202: Reference
signal and data signal

S203: Demodulate a first signal to obtain the
first data, and demodulate a second signal to
obtain the second data, where the first signal
includes a signal obtained after the reference
signal is transmitted, and the second signal
includes a signal obtained after the data signal
is transmitted

FIG. 2

Transmit end

Receive end

S301: Determine a reference signal and a data signal, where the reference signal is for transmitting first data, the data signal is for transmitting second data, the reference signal includes a first reference signal and a second reference signal, and a resource element carrying the first reference signal is adjacent to a resource element carrying the second reference signal in at least one of the following domains: time domain or frequency domain

S302: Reference signal and data signal

S303: Demodulate a first signal to obtain the first data, and demodulate a second signal to obtain the second data, where the first signal includes a signal obtained after the reference signal is transmitted, and the second signal includes a signal obtained after the data signal is transmitted

FIG. 3

Reference
signal block 1

Reference
signal block 2

| Known reference signal | Reference signal 1 (P1) | Reference signal 2 (P2) | Reference signal 3 (P3) | Known reference signal | Reference signal 4 (P1) | Reference signal 5 (P2) | Reference signal 6 (P3) |

Time domain

P: modulation and coding parameter

FIG. 4a

EP 4 387 150 A1

Reference
signal block 1

Reference
signal block 2

| Known reference signal | Reference signal 1 (P3) | Reference signal 2 (P1) | Reference signal 3 (P2) | | Known reference signal | Reference signal 4 (P3) | Reference signal 5 (P1) | Reference signal 6 (P2) |

Time domain

P: modulation and coding parameter

FIG. 4b

FIG. 4c

Reference signal block 1

Reference signal block 2

Known reference signal

Reference signal 1 (P2)

Reference signal 2 (P1)

Reference signal 3 (P2)

Known reference signal

Reference signal 4 (P2)

Reference signal 5 (P1)

Reference signal 6 (P2)

Time domain

P: modulation and coding parameter

Reference signal block 1

Known reference signal

Reference signal 1 (P1)

Reference signal block 2

Reference signal 2 (Pn)

Reference signal 3 (P1)

Reference signal block 3

Known reference signal

Reference signal 4 (P1)

Reference signal block 4

Reference signal 5 (Pn)

Reference signal 6 (P1)

Time domain

P: modulation and coding parameter
P1: smallest modulation and coding parameter
Pn: largest modulation and coding parameter

FIG. 5a

| Reference signal block 1 | | Reference signal block 2 | | Reference signal block 3 | | Reference signal block 4 | |
|---|---|---|---|---|---|---|---|
| Known reference signal | Reference signal 1 (Pn) | Reference signal 2 (P1) | Reference signal 3 (Pn) | Known reference signal | Reference signal 4 (Pn) | Reference signal 5 (P1) | Reference signal 6 (Pn) |

Time domain

P: modulation and coding parameter
P1: smallest modulation and coding parameter
Pn: largest modulation and coding parameter

FIG. 5b

Reference
signal block 1

Reference
signal block 2

Reference
signal block 3

| Known reference signal | Known reference signal | Reference signal 1 (P1) | Reference signal 2 (P1) | Reference signal 3 (P2) | Reference signal 4 (P2) |

P: modulation and coding parameter

Time domain

FIG. 6a

Reference
signal block 1

Reference
signal block 2

Reference
signal block 3

| Known reference signal | Known reference signal | Reference signal 1 (P2) | Reference signal 2 (P2) | Reference signal 3 (P1) | Reference signal 4 (P1) |

P: modulation and coding parameter

Time domain

FIG. 6b

Time domain

| Reference signal 1 (P1) | Reference signal 2 (Pn) | Reference signal 3 (P1) | Reference signal 4 (P1) | Reference signal 5 (Pn) | Reference signal 6 (P1) | Reference signal 7 (Pn) |

3rd OFDM symbol                                                                 Frequency domain

| Reference signal 1 (P1) | Reference signal 2 (Pn) | Reference signal 3 (P1) | Reference signal 4 (P1) | Reference signal 5 (Pn) | Reference signal 6 (P1) | Reference signal 7 (Pn) |

2nd OFDM symbol                                                                 Frequency domain

| Known reference signal | Reference signal 1 (Pn) | Reference signal 2 (P1) | Reference signal 3 (Pn) | Known reference signal | Reference signal 4 (Pn) | Reference signal 5 (P1) |

1st OFDM symbol                                                                 Frequency domain

P: modulation and coding parameter
P1: smallest modulation and coding parameter
Pn: largest modulation and coding parameter

FIG. 7a

EP 4 387 150 A1

Time domain

| Known reference signal | Reference signal 1 (Pn) | Reference signal 2 (P1) | Reference signal 3 (Pn) | Known reference signal | Reference signal 4 (Pn) | Reference signal 5 (P1) |

3rd OFDM symbol                                                    Frequency domain

| Reference signal 1 (P1) | Reference signal 2 (Pn) | Reference signal 3 (P1) | Reference signal 4 (P1) | Reference signal 5 (Pn) | Reference signal 6 (P1) | Reference signal 7 (Pn) |

2nd OFDM symbol                                                    Frequency domain

| Known reference signal | Reference signal 1 (Pn) | Reference signal 2 (P1) | Reference signal 3 (Pn) | Known reference signal | Reference signal 4 (Pn) | Reference signal 5 (P1) |

1st OFDM symbol                                                    Frequency domain

P: modulation and coding parameter
P1: smallest modulation and coding parameter
Pn: largest modulation and coding parameter

FIG. 7b

EP 4 387 150 A1

80

Communication apparatus

801

Processing unit

802

Transceiver unit

FIG. 8

90

Communication apparatus

901

Processor

904

902

Memory

Computer program

903

FIG. 9

1003

100

Memory

1001

Logic circuit

Chip

1002

Input/Output interface

FIG. 10

| | | | |
|---|---|---|---|
| | **INTERNATIONAL SEARCH REPORT** | International application No. | |
| | | **PCT/CN2022/124935** | |

**A.   CLASSIFICATION OF SUBJECT MATTER**

H04L 5/00(2006.01)i;   H04W 72/04(2009.01)i

According to International Patent Classification (IPC) or to both national classification and IPC

**B.   FIELDS SEARCHED**

Minimum documentation searched (classification system followed by classification symbols)

H04L; H04W; H04B; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 参考信号, 数据信号, 频域资源, 承载, 资源单元, 调制, 编码, 参数, 索引, 阶数, 码率, 频谱效率, 小于, 大于, reference signal, data signal, frequency domain resource, bearer, resource element, modulation, cod +, MCS, parameter, index, order, code rate, spectral efficiency, less than, greater than

**C.   DOCUMENTS CONSIDERED TO BE RELEVANT**

| Category* | Citation of document, with indication, where appropriate, of the relevant passages | Relevant to claim No. |
|---|---|---|
| X | CN 108809601 A (HUAWEI TECHNOLOGIES CO., LTD.) 13 November 2018 (2018-11-13) description, paragraphs [0005]-[0096] | 1-53 |
| A | CN 104980247 A (BEIJING SAMSUNG TELECOM R&D CENTER et al.) 14 October 2015 (2015-10-14) entire document | 1-53 |
| A | WO 2021189216 A1 (HUAWEI TECHNOLOGIES CO., LTD.) 30 September 2021 (2021-09-30) entire document | 1-53 |
| A | WO 2020261463 A1 (NTT DOCOMO, INC.) 30 December 2020 (2020-12-30) entire document | 1-53 |
| A | MODERATORVIVO. "Discussion summary #3 for [103-e-NR-52-71-Evaluations]" *3GPP TSG RAN WG1 Meeting #103-e, R1-200yyyy*, 13 November 2020 (2020-11-13), entire document | 1-53 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2022** | **30 November 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/124935**

| Patent document cited in search report | | | Publication date (day/month/year) | Patent family member(s) | | | Publication date (day/month/year) |
|---|---|---|---|---|---|---|---|
| CN | 108809601 | A | 13 November 2018 | EP | 3618337 | A1 | 04 March 2020 |
| | | | | CN | 114268414 | A | 01 April 2022 |
| | | | | US | 2020067628 | A1 | 27 February 2020 |
| | | | | CN | 112821986 | A | 18 May 2021 |
| | | | | PT | 3618337 | T | 16 November 2021 |
| | | | | EP | 3902184 | A1 | 27 October 2021 |
| | | | | US | 2022006560 | A1 | 06 January 2022 |
| | | | | IN | 201937045989 | A | 10 January 2020 |
| | | | | VN | 68791 | A | 25 February 2020 |
| CN | 104980247 | A | 14 October 2015 | KR | 20150115686 | A | 14 October 2015 |
| | | | | US | 2015288483 | A1 | 08 October 2015 |
| WO | 2021189216 | A1 | 30 September 2021 | None | | | |
| WO | 2020261463 | A1 | 30 December 2020 | US | 2022321299 | A1 | 06 October 2022 |
| | | | | EP | 3993529 | A1 | 04 May 2022 |

Form PCT/ISA/210 (patent family annex) (January 2015)

**REFERENCES CITED IN THE DESCRIPTION**

**Patent documents cited in the description**

- CN 202111212805